# EUROPEAN PATENT APPLICATION

(11) **EP 4 683 075 A1**
(43) Date of publication of application: **21.01.2026**
(21) Application number: 24795802.8
(22) Date of filing: 07.04.2024
(51) Int. Cl.: H01M 50/289, H01M 10/613, H01M 50/258, B62K 5/01

(54) **OUTDOOR WHEEL-TYPE TOOL AND BATTERY PACK THEREOF**

(30) Priority: 28.04.2023 CN 202310494442; 01.09.2023 CN 202311127391; 28.09.2023 CN 202311277515
(71) Applicant: Nanjing Chervon Industry Co., Ltd., Nanjing, Jiangsu 211106 (CN)
(72) Inventor: GAO, Yunfei, Nanjing, Jiangsu 211106 (CN); YANG, Dezhong, Nanjing, Jiangsu 211106 (CN); HAO, Jingdong, Nanjing, Jiangsu 211106 (CN); LI, Da, Nanjing, Jiangsu 211106 (CN); YUAN, Yongjie, Nanjing, Jiangsu 211106 (CN); ZHANG, Min, Nanjing, Jiangsu 211106 (CN); ZHANG, Yuexiang, Nanjing, Jiangsu 211106 (CN); WANG, Zhen, Nanjing, Jiangsu 211106 (CN); HE, Xiaolei, Nanjing, Jiangsu 211106 (CN); CHEN, Liang, Nanjing, Jiangsu 211106 (CN)
(74) Representative: Sun, Yiming
(86) International application number: PCT/CN2024/086306
(87) International publication number: WO 2024/222421

(57) **Abstract**

Provided are an outdoor wheeled tool and a battery pack thereof. A battery pack (100) includes a housing (110); multiple cells (130); and a cell holder (140) configured to support the multiple cells (130). Multiple exhaust channels (151) are disposed in the housing (110). The extension direction of the exhaust channels (151) is basically perpendicular to the extension direction of the cells (130). The energy of the battery pack (100) is greater than or equal to 2 kW·h.

## Description

This application claims priority to Chinese Patent Application No. 202310494442.5 filed with the China National Intellectual Property Administration (CNIPA) on Apr. 28, 2023, Chinese Patent Application No. 202311127391.9 filed with the CNIPA on Sep. 1, 2023, and Chinese Patent Application No. 202311277515.1 filed with the CNIPA on Sep. 28, 2023, the disclosures of which are incorporated herein by reference in their entireties.

### TECHNICAL FIELD

The present application relates to an energy storage device and, in particular, to an outdoor wheeled tool and a battery pack thereof.

### BACKGROUND

Outdoor wheeled tools and devices are used for working outdoors. For example, the outdoor wheeled tools and devices include a utility vehicle, an agricultural machinery vehicle, a farmer's vehicle, a dune buggy, a golf cart, a riding mower, and the like. When working outdoors, these devices need to be equipped with some energy storage devices. The energy storage devices of the existing outdoor traveling devices may be basically divided into two types: energy storage devices using gasoline, diesel, and other fuels; and electrical energy storage devices, for example, high-power battery packs. The battery packs are more environmentally friendly and save more energy than the fuels and thus are more attractive to users and manufacturers in recent years. However, the battery safety issues of the outdoor wheeled tools and devices powered by the battery packs have received widespread attention, such as the thermal runaway problem of the battery packs.

### SUMMARY

To solve the deficiencies in the existing art, an object of the present application is to provide a battery pack with higher safety performance and an outdoor wheeled tool using the battery pack.

To achieve the preceding object, the present application adopts the technical solutions below.

An outdoor wheeled tool includes a tool body; a traveling wheel set configured to support the tool body; a traveling electric motor configured to drive the traveling wheel set to travel; and a battery pack mounting portion disposed on the tool body and used for mounting at least one battery pack. The battery pack includes a housing; multiple cells; and a cell holder forming cell accommodation portions, each of which wraps each cell to isolate adjacent cells. The thermal deformation temperature of the cell holder is greater than or equal to 500°C. The total energy of the battery pack is greater than or equal to 1 kW·h and less than or equal to 8 kW·h.

In an example, the weight of the battery pack is greater than or equal to 10 kg.

In an example, the gravimetric energy density of the battery pack is greater than or equal to 100 Wh/kg and less than or equal to 200 Wh/kg.

In an example, the volumetric energy density of the battery pack is greater than or equal to 100 Wh/L and less than or equal to 200 Wh/L.

In an example, the battery pack is detachably mounted to the battery pack mounting portion.

In an example, after being removed from the battery pack mounting portion, the battery pack is configured to be coupled to a power tool to power the power tool.

In an example, the battery pack mounting portion includes multiple battery compartments, and different battery packs are accommodated in different battery compartments.

In an example, the cell holder includes surrounding portions, first end covers, and second end covers, the surrounding portion surrounds the cell, and the first end cover and the second end cover cover two ends of the surrounding portion.

In an example, the cell accommodation portion is a cylindrical cavity structure.

In an example, the cell accommodation portion is a cubic cavity structure.

In an example, the battery pack further includes tabs electrically connected to the cells, and the tabs are disposed on the first end covers and the second end covers.

In an example, multiple first cells extending in a direction perpendicular to a first plane are arranged in the first plane, multiple second cells extending in a direction perpendicular to a second plane are arranged in the second plane, a first cell holder fixes the first cells, and a second cell holder fixes the second cells.

In an example, the battery pack further includes a control board disposed at the upper end of the cell holder.

In an example, exhaust housings are disposed in the housing, and the exhaust housing forms at least one exhaust channel.

In an example, the extension direction of the exhaust channels is basically perpendicular to the extension direction of the cells.

In an example, the exhaust channels are curved.

In an example, the density of the exhaust housing is greater than or equal to 1 g/cm³.

In an example, the thermal deformation temperature of the exhaust housing is greater than or equal to 500°C.

In an example, the heat transfer coefficient of the exhaust housing at the first temperature is greater than or equal to 0.5 W/m·K, and the heat transfer coefficient of the exhaust housing at the second temperature is less than or equal to 0.05 W/m·K.

In an example, the exhaust channel includes air inlet portions, and the wall thickness of the air inlet portion is less than the wall thickness of a non-exhaust portion.

In an example, an air outlet of the exhaust channel corresponds to a window on the housing.

In an example, the air inlet portion corresponds to a positive electrode or negative electrode of the cell.

In an example, the air inlet portion of the exhaust channel includes a stop portion having a stopped state and an open state, where when the impact strength is greater than a set value, the stop portion is in the open state, and when the impact strength is less than the set value, the stop portion is in the stopped state.

In an example, the stop portion includes a valve.

In an example, the stop portion is formed by the exhaust housing, and multiple through holes are provided around the stop portion.

An outdoor wheeled tool includes a tool body; a traveling wheel set configured to support the tool body; a traveling electric motor configured to drive the traveling wheel set to travel; and a battery pack mounting portion disposed on the tool body and used for mounting at least one battery pack. The battery pack includes a housing; multiple cells; and a cell holder configured to support the multiple cells. The density of the cell holder is greater than or equal to 1 g/cm³. The heat transfer coefficient of the cell holder at the first temperature is greater than or equal to 0.5 W/m·K, and the heat transfer coefficient of the cell holder at the second temperature is less than or equal to 0.05 W/m·K. The rated discharge power of the battery pack is greater than or equal to 2 kW and less than or equal to 8 kW.

In some examples, the maximum continuous discharge power of the battery pack is greater than or equal to 4 kW.

In an example, the battery pack is detachably mounted to the battery pack mounting portion.

In an example, exhaust housings are disposed in the housing, and the exhaust housing forms at least one exhaust channel.

In an example, the extension direction of the exhaust channels is basically perpendicular to the extension direction of the cells.

In an example, the exhaust channels are curved.

An outdoor electric vehicle includes a vehicle body; a traveling wheel set configured to support the vehicle body; a traveling electric motor configured to drive the traveling wheel set to travel; and a battery pack mounting portion disposed on the vehicle body and used for mounting at least one battery pack. The battery pack includes a housing; multiple cells; and a cell holder configured to support the multiple cells. The heat transfer coefficient of the cell holder at the second temperature is less than or equal to 0.05 W/m·K. The nominal voltage of the battery pack is greater than or equal to 30 V.

In an example, after being removed from the battery pack mounting portion, the battery pack is configured to be coupled to a power tool to power the power tool.

In an example, the gravimetric energy density of the battery pack is greater than or equal to 100 Wh/kg and less than or equal to 200 Wh/kg.

In an example, the volumetric energy density of the battery pack is greater than or equal to 100 Wh/L and less than or equal to 200 Wh/L.

In an example, the cell holder includes surrounding portions, first end covers, and second end covers, the surrounding portion surrounds the cell, and the first end cover and the second end cover cover two ends of the surrounding portion.

In an example, exhaust housings are disposed in the housing, and the exhaust housing forms at least one exhaust channel.

In an example, the heat transfer coefficient of the exhaust housing at the first temperature is greater than or equal to 0.5 W/m·K, and the heat transfer coefficient of the exhaust housing at the second temperature is less than or equal to 0.05 W/m·K.

An outdoor electric vehicle includes a vehicle body; a traveling wheel set configured to support the vehicle body; a traveling electric motor configured to drive the traveling wheel set to travel; and a battery pack mounting portion disposed on the vehicle body and used for mounting at least one battery pack. The battery pack includes a housing; multiple cells; and a cell holder forming cell accommodation portions, each of which wraps each cell to isolate adjacent cells. The thermal deformation temperature of the cell holder is greater than or equal to 500°C. The nominal voltage of the battery pack is greater than or equal to 30 V.

In an example, the cell accommodation portion is a cylindrical cavity structure.

In an example, the cell accommodation portion is a cubic cavity structure.

In an example, multiple first cells extending in a direction perpendicular to a first plane are arranged in the first plane, multiple second cells extending in a direction perpendicular to a second plane are arranged in the second plane, a first cell holder fixes the first cells, and a second cell holder fixes the second cells.

In an example, exhaust housings are disposed in the housing, and the exhaust housing forms at least one exhaust channel.

In an example, the thermal deformation temperature of the exhaust housing is greater than or equal to 500°C.

In an example, the heat transfer coefficient of the exhaust housing at the first temperature is greater than or equal to 0.5 W/m·K, and the heat transfer coefficient of the exhaust housing at the second temperature is less than or equal to 0.05 W/m·K.

A power tool includes a tool body; and a battery pack mounting portion disposed on the tool body and used for mounting at least one battery pack. The battery pack includes a housing; multiple cells; and a cell holder configured to support the multiple cells. The heat transfer coefficient of the cell holder at the second temperature is less than or equal to 0.05 W/m·K. At least some of the cells are lithium iron phosphate cells. The total energy of the battery pack is greater than or equal to 1 kW·h and less than or equal to 8 kW·h.

In an example, the gravimetric energy density of the battery pack is greater than or equal to 100 Wh/kg and less than or equal to 200 Wh/kg.

In an example, the volumetric energy density of the battery pack is greater than or equal to 100 Wh/L and less than or equal to 200 Wh/L.

In an example, exhaust housings are disposed in the housing, and the exhaust housing forms at least one exhaust channel.

In an example, the extension direction of the exhaust channels is basically perpendicular to the extension direction of the cells.

In an example, the exhaust channels are curved.

In an example, the density of the exhaust housing is greater than or equal to 1 g/cm³.

In an example, the thermal deformation temperature of the exhaust housing is greater than or equal to 500°C.

In an example, the heat transfer coefficient of the exhaust housing at the first temperature is greater than or equal to 0.5 W/m·K, and the heat transfer coefficient of the exhaust housing at the second temperature is less than or equal to 0.05 W/m·K.

A battery pack suitable for an outdoor electrical device includes a housing; multiple cells; and a cell holder configured to support the cells. The heat transfer coefficient of the cell holder at the first temperature is greater than or equal to 0.5 W/m·K, and the heat transfer coefficient of the cell holder at the second temperature is less than or equal to 0.05 W/m·K. At least some of the cells are lithium iron phosphate cells. The nominal voltage of the battery pack is greater than or equal to 30 V.

In an example, the cell holder includes surrounding portions, first end covers, and second end covers, the surrounding portion surrounds the cell, and the first end cover and the second end cover cover two ends of the surrounding portion.

In an example, the battery pack further includes tabs electrically connected to the cells, and the tabs are disposed on the first end covers and the second end covers.

In an example, multiple first cells extending in a direction perpendicular to a first plane are arranged in the first plane, multiple second cells extending in a direction perpendicular to a second plane are arranged in the second plane, a first cell holder fixes the first cells, and a second cell holder fixes the second cells.

A battery pack suitable for an outdoor electrical device includes a housing; multiple cells; and a cell holder forming cell accommodation portions, each of which wraps each cell to isolate adjacent cells. The heat transfer coefficient of the cell holder at the second temperature is less than or equal to 0.05 W/m·K. At least some of the cells are lithium iron phosphate cells.

In an example, exhaust housings are disposed in the housing, and the exhaust housing forms at least one exhaust channel.

In an example, the density of the exhaust housing is greater than or equal to 1 g/cm³.

In an example, the thermal deformation temperature of the exhaust housing is greater than or equal to 500°C.

In an example, the heat transfer coefficient of the exhaust housing at the first temperature is greater than or equal to 0.5 W/m·K, and the heat transfer coefficient of the exhaust housing at the second temperature is less than or equal to 0.05 W/m·K.

### In an example, the exhaust channel includes air inlet portions, and the wall thickness of the air inlet portion is less than the wall thickness of a non-exhaust portion.

In an example, the air inlet portion of the exhaust channel includes a stop portion having a stopped state and an open state, where when the impact strength is greater than a set value, the stop portion is in the open state, and when the impact strength is less than the set value, the stop portion is in the stopped state.

In an example, the stop portion includes a valve.

In an example, the stop portion is formed by the exhaust housing, and multiple through holes are provided around the stop portion.

A battery pack suitable for an outdoor electrical device includes a housing; multiple cells; and a cell holder configured to support the multiple cells. Multiple exhaust channels are disposed in the housing. The extension direction of the exhaust channels is basically perpendicular to the extension direction of the cells. The energy of the battery pack is greater than or equal to 2 kW·h.

In an example, the weight of the battery pack is greater than or equal to 10 kg.

In an example, the gravimetric energy density of the battery pack is greater than or equal to 100 Wh/kg and less than or equal to 200 Wh/kg.

In an example, the volumetric energy density of the battery pack is greater than or equal to 100 Wh/L and less than or equal to 200 Wh/L.

A riding mower includes a machine housing; a seat mounted to the machine housing; a traveling wheel set including traveling wheels supporting the machine housing; a traveling electric motor for driving the traveling wheels to rotate; a mowing assembly including a mowing element for mowing grass; a drive electric motor for driving the mowing assembly to mow grass; and a battery pack mounting portion for mounting a battery pack that supplies power to the traveling electric motor. The battery pack includes a first battery pack configured to be capable of supplying power to the traveling electric motor and including multiple third cells supported by a third cell holder; and a second battery pack configured to be capable of supplying power to the traveling electric motor and including multiple fourth cells supported by a fourth cell holder. The heat transfer coefficient of the third cell holder and/or the fourth cell holder at the second temperature is less than or equal to 0.05 W/m·K. The nominal voltage of the first battery pack and/or the second battery pack is greater than or equal to 30 V.

In an example, the gravimetric energy density of the battery pack is greater than or equal to 100 Wh/kg and less than or equal to 200 Wh/kg.

In an example, the volumetric energy density of the battery pack is greater than or equal to 100 Wh/L and less than or equal to 200 Wh/L.

In an example, after being removed from the battery pack mounting portion, the battery pack is configured to be coupled to a power tool to power the power tool.

A riding mower includes a machine housing; a seat mounted to the machine housing; a traveling wheel set including traveling wheels supporting the machine housing; a traveling electric motor for driving the traveling wheels to rotate; a mowing assembly including a mowing element for mowing grass; a drive electric motor for driving the mowing assembly to mow grass; and a battery pack mounting portion for mounting a battery pack that supplies power to the traveling electric motor. The battery pack includes a housing; a first cell module including first cells and a first cell holder supporting the first cells; and a second cell module including second cells and a second cell holder supporting the second cells. A positive electrode/negative electrode of the first cell is spaced a certain distance from a positive electrode/negative electrode of the second cell. Exhaust channels are disposed between positive electrodes/negative electrodes of the first cells and positive electrodes/negative electrodes of the second cells.

In an example, the extension direction of the exhaust channels is basically perpendicular to the extension direction of the cells.

In an example, the exhaust channels are curved.

In an example, the exhaust channel includes air inlet portions, and the wall thickness of the air inlet portion is less than the wall thickness of a non-exhaust portion.

In an example, the air inlet portion corresponds to a positive electrode or negative electrode of the cell.

In an example, an air outlet of the exhaust channel corresponds to a window on the housing.

An all-terrain vehicle includes a vehicle frame; a vehicle body cover; a traveling wheel set configured to support the vehicle frame; a drive electric motor configured to drive the traveling assembly; and a battery pack configured to supply power to at least the drive electric motor. The nominal voltage of the battery pack is greater than or equal to 30 V. The battery pack includes a housing; multiple cells; a cell holder configured to support the multiple cells; and exhaust channels disposed in the housing. The exhaust channel is provided with air inlet portions. The air inlet portions are closed at the first temperature and opened at the second temperature.

**In** an example, the exhaust channel includes air inlet portions, and the wall thickness of the air inlet portion is less than the wall thickness of a non-air-inlet portion.

**In** an example, the air inlet portion corresponds to a positive electrode or negative electrode of the cell.

**In** an example, an air outlet of the exhaust channel corresponds to a window on the housing.

An outdoor wheeled tool includes a vehicle frame; traveling wheels configured to support the vehicle frame; an electric motor configured to at least drive the traveling wheels to travel; and a battery compartment configured to accommodate a battery pack that supplies power to the electric motor. The battery compartment is provided with an airflow channel, and when the battery pack is mounted in the battery compartment, a pressure relief port of the battery pack is connected to an end of the airflow channel.

In some examples, the compartment body of the battery compartment is at least partially made of a metal material.

In some examples, the airflow channel is at least partially configured to be a curved channel.

In some examples, the other end of the airflow channel is connected to the external atmosphere.

In some examples, the battery compartment is detachably mounted at the rear end of the vehicle frame.

In some examples, the battery compartment is integrally formed with the vehicle frame.

In some examples, a buffer structure is disposed in the airflow channel.

In some examples, a fireproof structure is disposed in the airflow channel.

In some examples, a fireproof cover is provided outside the battery compartment, and the fireproof cover and at least an outer wall of the battery compartment covered by the fireproof cover form the airflow channel.

In some examples, an opening on the battery compartment forms an end of the airflow channel, and the fireproof cover is detachably mounted on the battery compartment and covers at least the opening on the battery compartment.

An outdoor wheeled tool includes a vehicle frame; traveling wheels configured to support the vehicle frame; an electric motor configured to at least drive the traveling wheels to travel; and a battery compartment configured to accommodate a battery pack that supplies power to the electric motor. The battery compartment is formed with an airflow channel, and the airflow channel is configured to at least guide the airflow to the bottom of the battery compartment for discharge.

In some examples, the battery compartment is detachably mounted to the vehicle frame.

In some examples, multiple openings are provided on a compartment base plate of the battery compartment.

In some examples, at least a portion of a compartment base plate of the battery compartment is recessed outward, and multiple openings are provided at least on the portion of the compartment base plate recessed outward.

In some examples, at least one smoke exhaust channel is formed on a sidewall and/or a top compartment cover of the battery compartment.

In some examples, at least one wall of the battery compartment is a mesh structure.

An outdoor wheeled device includes a device body; traveling wheels configured to support the device body; an electric motor configured to at least drive the traveling wheels to travel; and a battery compartment configured to accommodate a battery pack that supplies power to the electric motor. The heat transfer coefficient of the main material of the compartment body of the battery compartment at room temperature is greater than or equal to 20 W/m·K.

In some examples, the melting point of the main material of the compartment body is greater than or equal to 1000°C.

In some examples, the main material of the compartment body is an iron-based alloy.

In some examples, the compartment body is at least partially a mesh structure.

In some examples, the compartment body is detachably mounted to the device body.

In some examples, the compartment body is integrally formed with the device body.

An outdoor wheeled tool includes a vehicle frame; traveling wheels configured to support the vehicle frame; an electric motor configured to at least drive the traveling wheels to travel; and a battery compartment configured to accommodate a battery pack that supplies power to the electric motor. The battery compartment includes at least two sub-compartments, a partition is provided between at least two adjacent sub-compartments, and the partition is at least partially made of a flame-retardant material.

In some examples, the heat transfer coefficient of the flame-retardant material at room temperature is less than or equal to 2 W/m·K.

In some examples, the battery compartment is detachably mounted at the rear end of the vehicle frame.

In some examples, the battery compartment is integrally formed with the vehicle frame.

In some examples, at least one smoke exhaust channel is provided on the partition.

In some examples, at least one smoke exhaust channel is formed on a sidewall and/or a top compartment cover of the battery compartment.

In some examples, at least a portion of the bottom of the battery compartment is recessed inward, and multiple openings capable of discharging the airflow in the battery compartment are provided at least on the portion of the bottom of the battery compartment recessed inward.

In some examples, at least one wall of the battery compartment is a mesh structure.

A battery pack includes a housing; a cell module including multiple cell units and disposed in the housing; a terminal assembly configured to be connected to a power tool to supply power to the power tool, where the terminal assembly is disposed on an outer side of the housing; and a pressure relief device disposed on the housing. The pressure relief device includes a waterproof and breathable layer and at least one layer of metal mesh.

In some examples, the pressure relief device is disposed on a bottom housing of the battery pack.

In some examples, the at least one layer of metal mesh is disposed on an inner side of the waterproof and breathable layer.

In some examples, the waterproof and breathable layer ruptures when the air pressure inside the battery pack is greater than or equal to 2 kPa.

In some examples, the pressure relief device further includes a protection structure disposed on an outer side of the waterproof and breathable layer.

In some examples, the waterproof and breathable layer is provided with a pre-indentation.

In some examples, the pressure relief device further includes a puncture needle configured to puncture the waterproof and breathable layer when the waterproof and breathable layer bulges from the inside out.

In some examples, the at least one layer of metal mesh includes a first metal mesh and a second metal mesh that are adjacent to each other, and the first metal mesh is disposed on an inner side of the second metal mesh.

A battery pack includes a housing; a cell module including multiple cell units and disposed in the housing; and at least one energy conversion device configured to at least perform energy conversion from thermal energy to kinetic energy, where the at least one energy conversion device is disposed in the housing and thermally connected to the multiple cell units.

In some examples, the energy conversion device includes a fan.

In some examples, the fan includes a centrifugal fan.

In some examples, the fan is disposed at a corner within the housing.

In some examples, the radial dimension of the fan is greater than or equal to 50 mm.

In some examples, at least one air outlet opening is formed on the housing.

In some examples, the battery pack further includes flow guide members, where the flow guide member is configured to guide the airflow toward the air outlet opening.

A battery pack includes a housing; a first cell module including multiple cell units and disposed in the housing; and a second cell module including multiple cell units and disposed in the housing. The housing has a first compartment and a second compartment, the first cell module is disposed in the first compartment, the second cell module is disposed in the second compartment, and the first compartment and the second compartment are thermally isolated.

In some examples, the heat transfer coefficient of the material of the first compartment and the second compartment is greater than or equal to 25 W/m·K.

In some examples, the yield strength of the material of the first compartment and the second compartment is greater than or equal to 150 MPa.

In some examples, the material of the first compartment and the second compartment includes at least one of PV6 and flame-retardant nylon.

In some examples, the first cell module and the second cell module are connected in parallel.

In some examples, the first compartment is provided with a first pressure relief port, and the second compartment is provided with a second pressure relief port.

In some examples, a first pressure relief channel is formed on the outer side of the first compartment, a second pressure relief channel is formed on the outer side of the second compartment, an end of the first pressure relief channel is connected to the first pressure relief port, and an end of the second pressure relief channel is connected to the second pressure relief port.

In some examples, a pressure relief valve is further formed on the housing of the battery pack, the other end of the first pressure relief channel is connected to the pressure relief valve, and the other end of the second pressure relief channel is also connected to the pressure relief valve.

In some examples, the housing forms the first compartment and the second compartment.

A battery pack includes a housing; multiple cell units disposed in the housing; at least one discharge resistor capable of being electrically connected to the multiple cell units; multiple switching elements electrically connected to the multiple cell units, respectively and electrically connected to the at least one discharge resistor; a parameter detection unit configured to detect battery parameters of the battery pack; and a controller configured to control at least one switching element to be turned on when determining according to the battery parameters that the battery pack is at risk of thermal runaway so that the discharge of at least one of the multiple cell units is performed through the at least one discharge resistor.

In some examples, the discharge resistor is disposed near the housing.

In some examples, the discharge resistor is disposed between the housing and the multiple cell units.

In some examples, at least two cell units are capable of being connected in parallel and discharged simultaneously through the discharge resistor.

In some examples, the controller is further configured to, when the remaining power of a discharged cell unit is less than or equal to a power threshold, control a respective switching element to be turned off.

In some examples, the power threshold is less than or equal to 50%.

A battery pack includes a housing; a cell module including multiple cell units and disposed in the housing; and a pressure relief device detachably mounted to the housing. The pressure relief device is configured to at least guide the high-temperature gas generated by the thermal runaway of at least one cell unit to be discharged from the housing.

In some examples, the pressure relief device includes a guide assembly formed with guide channels for guiding the flow of the high-temperature gas.

In some examples, the guide channels include at least multiple cyclone-shaped airflow paths.

In some examples, the guide assembly includes a first guide member disposed toward an inner side of the battery pack and a second guide member opposite to the first guide member, and a channel inlet of the guide channels is disposed on the first guide member.

In some examples, the first guide member and the second guide member are detachably connected.

In some examples, the guide assembly includes first guide ribs disposed on an end surface of the first guide member opposite to the second guide member and second guide ribs disposed on an end surface of the second guide member opposite to the first guide member.

In some examples, the first guide ribs and the second guide ribs are configured to define and form the guide channels.

In some examples, the first distance from the lower vertex of the first guide ribs to the upper surface of the second guide member is greater than zero, and the second distance from the upper vertex of the second guide ribs to the lower surface of the first guide member is greater than zero.

In some examples, the first distance is equal to the second distance.

In some examples, the first distance is unequal to the second distance.

In some examples, the guide assembly is made of a metal material.

In some examples, the pressure relief device further includes a sealing member disposed at an upper end of the first guide member to seal a gap between the guide assembly and the housing.

In some examples, the pressure relief device further includes a flame arrester assembly disposed on an inner side of the guide assembly and configured to at least prevent open flames generated by thermal runaway of the cell units from entering the guide assembly.

In some examples, the flame arrester assembly includes at least a partition mesh provided with multiple flame arrester holes.

In some examples, the partition mesh is disposed on the innermost side of the pressure relief device.

In some examples, the partition mesh includes at least two adjacent layers of metal meshes.

In some examples, the partition mesh includes at least two adjacent layers of metal foams.

In some examples, a phase change coating is provided on an outer side surface of at least one layer of metal mesh.

In some examples, a fire extinguishing material is provided between at least adjacent metal meshes.

In some examples, a fire extinguishing material is provided between at least adjacent metal foams.

In some examples, the pressure relief device further includes a separator disposed between the guide assembly and the flame arrester assembly.

A battery pack includes a housing; a cell module including multiple cell units and disposed in the housing; and a pressure relief device detachably mounted to the housing. The pressure relief device includes at least a flame arrester assembly configured to at least prevent open flames generated by thermal runaway of at least one cell unit from escaping from the housing.

In some examples, the pressure relief device further includes a guide assembly configured to at least guide high-temperature gas coming out of the flame arrester assembly to the outside of the housing.

In some examples, the flame arrester assembly includes at least a partition mesh provided with multiple flame arrester holes.

In some examples, the partition mesh is disposed on the innermost side of the pressure relief device.

In some examples, the partition mesh includes at least two adjacent layers of metal meshes.

In some examples, a phase change coating is provided on an outer side surface of at least one layer of metal mesh.

In some examples, a fire extinguishing material is provided between at least adjacent metal meshes.

In some examples, the pressure relief device further includes a separator disposed between the guide assembly and the flame arrester assembly.

A battery pack includes a housing; a cell module including multiple cell units and disposed in the housing; and a pressure relief device disposed in the housing. The pressure relief device includes at least a fire arrester assembly located at an end of the pressure relief device facing the cell module and configured to at least prevent open flames generated by thermal runaway of at least one cell unit from escaping from the housing; and a guide assembly located at an end of the pressure relief device facing away from the cell module and configured to at least guide high-temperature gas generated by thermal runaway of at least one cell unit to be discharged from the housing.

In some examples, the pressure relief device further includes a sealing member disposed at an upper end of the guide assembly to seal a gap between the guide assembly and the housing.

In some examples, the guide assembly is formed with guide channels for guiding the flow of the high-temperature gas.

In some examples, the channel inlet of the guide channel is configured to face the flame arrester assembly.

In some examples, the guide channels include multiple cyclone-shaped airflow paths.

In some examples, the flame arrester assembly includes at least a partition mesh provided with multiple flame arrester holes.

In some examples, the pressure relief device further includes a separator disposed between the guide assembly and the flame arrester assembly.

A power tool includes a machine housing; an electric motor disposed in the machine housing; and a battery mounting portion for mounting a battery pack for supplying power to at least the electric motor. The battery pack includes a housing; a cell module including multiple cell units and disposed in the housing; and a pressure relief device disposed in the housing. The pressure relief device is configured to at least guide the high-temperature gas generated by the thermal runaway of at least one cell unit to be discharged from the housing and at least prevent open flames generated by thermal runaway of at least one cell unit from escaping from the housing.

An outdoor wheeled tool includes a vehicle frame; traveling wheels configured to support the vehicle frame; an electric motor configured to at least drive the traveling wheels to travel; and a battery compartment configured to accommodate a battery pack that supplies power to at least the electric motor. The battery pack includes a housing; a cell module including multiple cell units and disposed in the housing; and a pressure relief device detachably mounted to the housing. The pressure relief device is configured to at least guide the high-temperature gas generated by the thermal runaway of at least one cell unit to be discharged from the housing.

In some examples, the pressure relief device includes a guide assembly formed with guide channels for guiding the flow of the high-temperature gas.

In some examples, the pressure relief device further includes a flame arrester assembly disposed on an inner side of the guide assembly and configured to at least prevent open flames generated by thermal runaway of the cell units from entering the guide assembly.

In some examples, the pressure relief device further includes a separator disposed between the guide assembly and the flame arrester assembly.

In some examples, the pressure relief device further includes a sealing member disposed at an upper end of the guide assembly to seal a gap between the guide assembly and the housing.

In some examples, the battery compartment is provided with an exhaust opening corresponding to the pressure relief device.

### BRIEF DESCRIPTION OF DRAWINGS

FIG. 1 is a perspective view of outdoor wheeled devices according to an example of the present application.
FIG. 2 is a structural view of a battery pack in FIG. 1.
FIG. 3 is a structural view of cells and a cell holder inside the battery pack in FIG. 2 according to an example.
FIG. 4 is a structural view of cells and a cell holder inside the battery pack in FIG. 2 according to another example.
FIG. 5 is an exploded view of some internal structures of the battery pack in FIG. 2 according to an example.
FIG. 6 is an exploded view of some internal structures of the battery pack in FIG. 2 according to another example.
FIG. 7 is a perspective view of an exhaust housing inside the battery pack in FIG. 2 according to an example.
FIG. 8 is a schematic view of an air inlet portion of an exhaust channel inside the battery pack in FIG. 2 according to an example.
FIG. 9A is a perspective view of a riding mower according to an example of the present application.
FIG. 9B is a perspective view of a riding mower according to another example of the present application.
FIG. 10 is a perspective view of a battery pack according to an example of the present application.
FIG. 11 is an exploded view of some structures of the battery pack in FIG. 10.
FIG. 12 is a structural view of a pressure relief device of the battery pack in FIG. 10.
FIG. 13 is an exploded view of the pressure relief device in FIG. 12.
FIG. 14 is an exploded view of a pressure relief device according to another example.
FIG. 15 is a perspective view illustrating that a battery pack includes at least energy conversion devices according to an example from one perspective.
FIG. 16 is a perspective view illustrating that a battery pack includes at least energy conversion devices according to an example from another perspective.
FIGS. 17A and 17B are structural views of a battery pack with compartments according to an example.
FIG. 18 is a schematic diagram of a control circuit in a battery pack according to an example.
FIG. 19 is a schematic view of a battery compartment and a battery pack of an outdoor wheeled tool.
FIG. 20 is a structural view of a battery compartment according to an example.
FIG. 21 is a schematic view of a compartment base plate of the battery compartment in FIG. 20.
FIG. 22 is a structural view of a battery pack and a pressure relief device according to an example.
FIG. 23 is a sectional view of a pressure relief device mounted on a battery pack housing according to an example.
FIG. 24 is a sectional view of a pressure relief device mounted on a battery pack housing according to an example.
FIG. 25 is a structural view of a pressure relief device according to an example.
FIG. 26 is an exploded view of the pressure relief device in FIG. 25 from one perspective.
FIG. 27 is an exploded view of the pressure relief device in FIG. 25 from another perspective.
FIG. 28 is a sectional view of a pressure relief device according to an example.
FIG. 29 is a sectional view of a pressure relief device according to an example.
FIG. 30 is an exploded view of some structures of a cell module provided with pressure relief assemblies according to an example.
FIG. 31 is a structural view of a cell module provided with pressure relief assemblies according to an example.
FIG. 32 is a sectional view of a cell module provided with pressure relief assemblies according to an example.

### DETAILED DESCRIPTION

The present application is described below in detail in conjunction with drawings and examples. It is to be understood that the examples described herein are intended to illustrate the present application and not to limit the present application. Additionally, it is to be noted that for ease of description, only part, not all, of structures related to the present application are illustrated in the drawings.

Unless otherwise defined, all technical and scientific terms used herein have the same meanings as those commonly understood by those skilled in the art to which the present application pertains. Terms used in the specification of the present application are used only for describing the examples and not intended to limit the present application. The term "and/or" used herein indicates the inclusion of any or all combinations of one or more listed associated items. Additionally, the character "/" herein generally indicates an "or" relationship between associated objects before and after the character "/".

It is to be noted that nouns of locality such as "up", "down", "left", and "right" in the examples of the present application are described from angles shown in the drawings and are not to be construed as limiting the examples of the present application. In addition, in the context, it is to be understood that when an element is connected "above" or "below" another element, the element can not only be directly connected "above" or "below" the other element but can also be indirectly connected "above" or "below" the other element through an intermediate element. It is also to be understood that orientation words such as an upper side, a lower side, a left side, a right side, a front side, and a rear side not only represent positive orientations but also may be understood as lateral orientations. For example, the term "below" may refer to "directly below", "on a lower left", "on a lower right", "on a front lower side", "on a rear lower side", and the like.

It is to be understood by those of ordinary skill in the art that a relative term (such as "about", "approximately", "substantially", and "basically") used in conjunction with a quantity or a condition includes the stated value and has a meaning indicated by the context (for example, the term includes at least a degree of error associated with the measurement of a particular value, a tolerance (such as manufacturing, assembly, and use) associated with the particular value, and the like). Such a term is to be construed as disclosing a range defined by the absolute values of two endpoints. The relative term may refer to an indicated value increased or reduced by a certain percentage (such as 1%, 5%, 10% or more). Of course, a value not modified by a relative term should also be disclosed as a particular value with a tolerance.

It is to be noted that the "first, second, third, fourth" and so on in this example may be understood as terms set to distinguish different components or devices, rather than terms set for ordering.

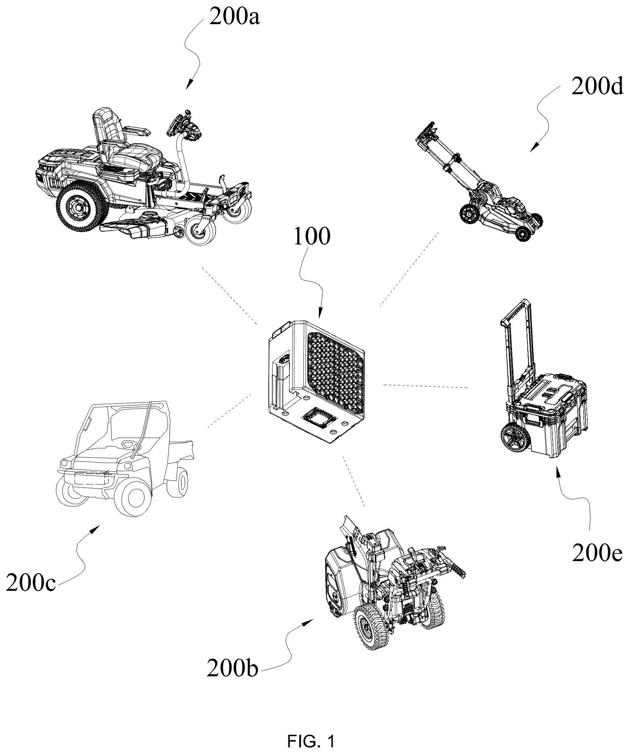

In this example, various outdoor wheeled devices 200 can be powered by a battery pack 100. FIG. 1 shows several common wheeled devices such as a riding mower 200a, a snow thrower 200b, an all-terrain vehicle 200c, a push mower 200d, and a mobile power station 200e. Other common wheeled devices that can be powered by the battery pack 100 are also within the scope of the present application, for example, a mobile power station, a wheeled fan, a wheeled illumination device, a wheeled blower, and a cleaning vehicle. In this example, the outdoor wheeled device 200 may also be referred to as an outdoor wheeled tool 200.

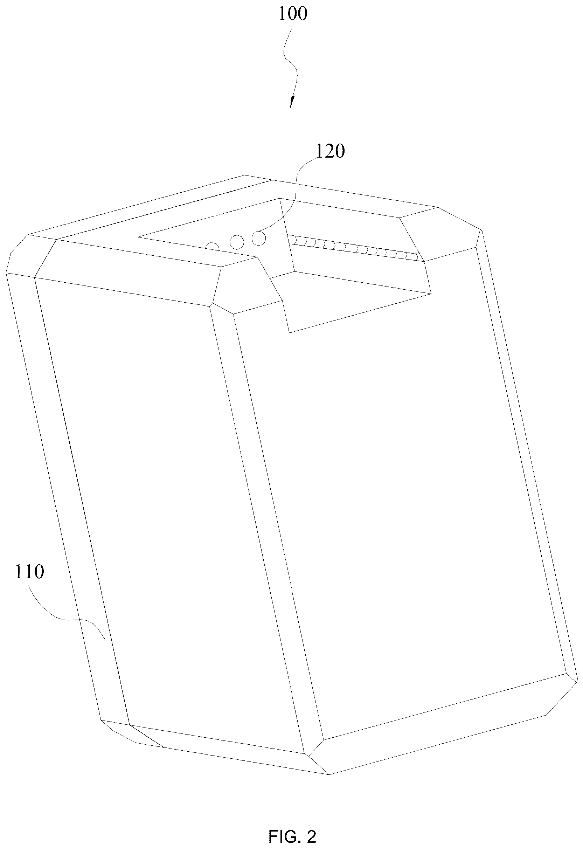

In this example, the battery pack 100 may be fixedly mounted on a battery pack mounting portion, or the battery pack 100 may be detachably mounted on the battery pack mounting portion. For example, the battery pack 100 may be fixed to a tool body through welding, a screw connection, a snap-fit, or another non-movable connection. Alternatively, the battery pack 100 is mounted to a machine housing in an insertable and removable manner. For example, a housing 210 of the battery pack 100 is provided with a battery pack interface 220 that enables the battery pack 100 to be mounted to the machine housing in an insertable and removable manner, and correspondingly, the machine housing is provided with a tool interface docking with the battery pack interface 220. The battery pack interface 220 may be understood as a terminal assembly. In other examples, the battery pack mounting portion may include an accommodation portion fixedly connected to the battery pack 100 and an accommodation portion for detachably mounting the battery pack 100. The accommodation portion connected to the battery pack 100 is also referred to as a battery compartment 24 (as shown in FIGS. 2A and 2B). A fixed battery pack 100 and a detachable battery pack 100 can be mounted to the outdoor wheeled device 200. A connection manner of the battery pack 100 mounted to the outdoor wheeled device 200 and the number of mounted battery packs 100 are not limited in the present application.

In this example, the battery pack 100 can be coupled to other power tools to power the power tools after being removed from the battery pack mounting portion. For example, the battery pack 100 can also power a blower or a snow thrower after being removed from a mower.

In this example, the nominal voltage of the battery pack 100 is greater than or equal to 30 V. The nominal voltage of the battery pack 100 may be greater than or equal to 20 V and less than or equal to 100 V, or the nominal voltage of the battery pack 100 may be greater than or equal to 36 V and less than or equal to 80 V, or the nominal voltage of the battery pack 100 may be greater than or equal to 40 V and less than or equal to 60 V. Alternatively, the nominal voltage of the battery pack 100 may be greater than or equal to 100 V and less than or equal to 800 V. The nominal voltage of the battery pack 100 may be 20 V, 24 V, 36 V, 40 V, 48 V, 56 V, 60 V, 80 V, 100 V, 400 V, or 800 V. This allows the voltages of different battery packs of the outdoor wheeled device 100 using multiple battery packs 100 to be compatible with other voltage platforms of the battery packs. Thus, the total energy of the battery packs in the wheeled device can be increased. When at least two battery packs 100 are arranged in the outdoor wheeled device 100, the nominal voltages of the at least two battery packs 100 may be the same or different.

The weight of the battery pack 100 is greater than or equal to 10 kg. Alternatively, the weight of the battery pack 100 is greater than or equal to 15 kg. Alternatively, the weight of the battery pack 100 is greater than or equal to 16 kg. Alternatively, the weight of the battery pack 100 is greater than or equal to 17 kg. Alternatively, the weight of the battery pack 100 is greater than or equal to 18 kg. Alternatively, the weight of the battery pack 100 is greater than or equal to 19 kg. Alternatively, the weight of the battery pack 100 is greater than or equal to 20 kg. The gravimetric energy density of the battery pack is greater than or equal to 100 Wh/kg and less than or equal to 100 Wh/kg. Alternatively, the gravimetric energy density of the battery pack 100 is greater than or equal to 120 Wh/kg and less than or equal to 100 Wh/kg. Alternatively, the gravimetric energy density of the battery pack 100 is greater than or equal to 100 Wh/kg and less than or equal to 150 Wh/kg. Alternatively, the gravimetric energy density of the battery pack 100 is greater than or equal to 150 Wh/kg and less than or equal to 100 Wh/kg. The volumetric energy density of the battery pack 100 is greater than or equal to 100 Wh/L and less than or equal to 100 Wh/L. Alternatively, the volumetric energy density of the battery pack 100 is greater than or equal to 150 Wh/L and less than or equal to 100 Wh/L. Alternatively, the volumetric energy density of the battery pack 100 is greater than or equal to 90 Wh/L and less than or equal to 100 Wh/L. Alternatively, the volumetric energy density of the battery pack 100 is greater than or equal to 100 Wh/L and less than or equal to 150 Wh/L. A relatively high gravimetric energy density or volumetric energy density enables the outdoor wheeled device 100 mounted with a battery pack of the same volume or weight to obtain more energy, thereby ensuring the endurance of the wheeled device. For example, the requirement for the wheeled device to operate outdoors for half a day can be satisfied, and the dimension or load requirement of the device can also be satisfied.

The total energy of the battery pack 100 is greater than or equal to 1 kW·h and less than or equal to 8 kW·h. Alternatively, the total energy of the battery pack 100 is greater than or equal to 1 kW·h and less than or equal to 4 kW·h. Alternatively, the total energy of the battery pack 100 is greater than or equal to 500 W·h and less than or equal to 2 kW·h. Alternatively, the total energy of the battery pack 100 is greater than or equal to 2 kW·h and less than or equal to 6 kW·h. Alternatively, the total energy of the battery pack 100 is greater than or equal to 4 kW·h and less than or equal to 8 kW·h. Alternatively, the total energy of the battery pack 100 is greater than or equal to 300 W·h and less than or equal to 8 kW·h. In this manner, when at least one battery pack 100 in the outdoor wheeled device 100 is in a fully charged state, the outdoor wheeled device 100 can mow for 4 to 6 hours by using the battery pack 100.

The rated discharge power of the battery pack 100 is greater than or equal to 2 kW and less than or equal to 8 kW. Alternatively, the rated discharge power of the battery pack 100 is greater than or equal to 3 kW and less than or equal to 8 kW. Alternatively, the rated discharge power of the battery pack 100 is greater than or equal to 4 kW and less than or equal to 8 kW. Alternatively, the rated discharge power of the battery pack 100 is greater than or equal to 5 kW and less than or equal to 8 kW. In this example, the maximum continuous discharge power of the battery pack is greater than or equal to 300 kW and less than or equal to 8 kW. Alternatively, the maximum continuous discharge power of the battery pack is greater than or equal to 3 kW and less than or equal to 15 kW. Alternatively, the maximum continuous discharge power of the battery pack is greater than or equal to 4 kW and less than or equal to 10 kW. Alternatively, the maximum continuous discharge power of the battery pack is greater than or equal to 2 kW and less than or equal to 10 kW. Therefore, the battery pack placed in the outdoor wheeled device 100 has higher discharge efficiency. The maximum continuous discharge power refers to the discharge power of the outdoor wheeled device 100 during normal operation. However, abnormally large instantaneous discharge power occurring in the case where the outdoor wheeled device 100 is in a locked rotor condition or cuts some stones is not included in the maximum continuous discharge power in this example.

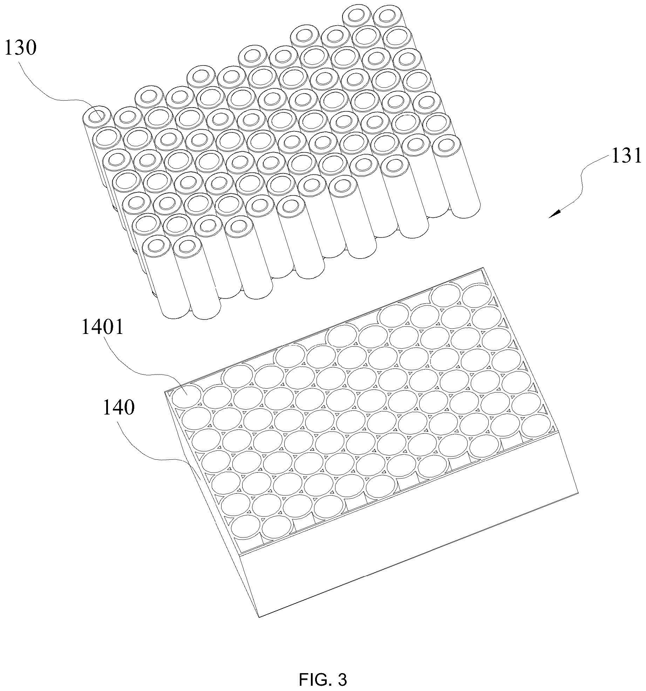

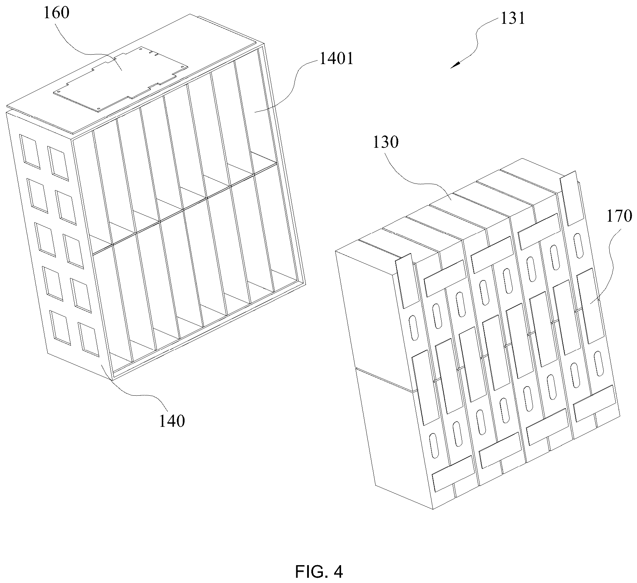

As shown in FIGS. 2 to 8, the battery pack 100 includes a housing 110, a battery pack interface 120, cells 130, and a cell holder 140. The housing 110 may form a cuboid-like accommodation cavity for accommodating the cells 130 and the cell holder 140. The shape of the accommodation cavity formed by the housing 110 is related to the arrangement of the cells 130. For example, if a cell module 131 formed by arranging multiple cells 130 is approximately cylindrical, then the accommodation cavity formed by the housing 110 is also basically cylindrical. In this example, the cell holder 140 is configured to support the cells 130 to form the cell module 131. For example, as shown in FIG. 3, the cell holder 140 can form cell accommodation cavities 1401, and each cell accommodation cavity 1401 includes the cell 130 and isolates the cell 130 from adjacent cells 130. The cell accommodation cavity 1401 for accommodating the cell 230 may be a cylindrical accommodation cavity as shown in FIG. 3 or a cubic accommodation cavity as shown in FIG. 4. The shape of the cell accommodation cavity 1401 is adapted to the shape of the cell 130 accommodated in the cell accommodation cavity 1401. For example, if the cell 130 is cylindrical, the cell accommodation cavity 1401 is cylindrical; and if the cell 130 is cubic, the cell accommodation cavity 1401 is cubic.

In this example, at least part of the cells 130 are lithium iron phosphate cells. Alternatively, materials of positive electrodes of at least part of the cells 130 are sodium-ion cells. Alternatively, materials of positive electrodes of at least part of the cells 130 are capacitor batteries. Alternatively, materials of positive electrodes of at least part of the cells 130 are lithium-ion cells, for example, ternary lithium cells. Alternatively, materials of positive electrodes of at least part of the cells 130 are supercapacitors. Alternatively, various cells of different materials or properties are arranged in the battery pack 100.

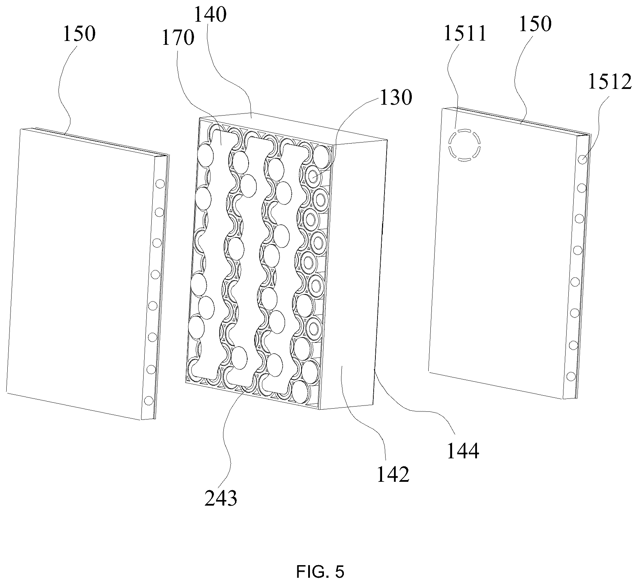

In this example, as shown in FIG. 5, the cell holder 140 may include surrounding portions 1402, first end covers 1403, and second end covers 1404, the surround portion 1402 surrounds the cell 130, and the first end cover 1403 and the second end cover 1404 cover two ends of the surrounding portion 1402. One surrounding portion 1402, the first end cover 1403, and the second end cover 1404 together form one cell accommodation cavity 1401, the first end cover 1403 and the second end cover 1404 are at two ends of the surrounding portion 1402, and multiple cell accommodation cavities 1401 and other parts of the cell holder 140 connecting the multiple cell accommodation cavities 1401 together form the cell holder 140. In this example, the first end cover 1403 and the second end cover 1404 are semi-closed end covers and can at least keep the cell 130 in the cell accommodation cavity 1401 and expose the positive or negative electrode of the cell 130 outside the cell accommodation cavity 1401 so that the cell 130 can be electrically connected to a control board 160 inside the battery pack 100 or different cells 130 can be connected to each other. In this example, the control board 160 may be disposed at the upper end of the cell holder 140 or on the upper part of the accommodation cavity formed by the housing 110. The battery pack 100 may further include tabs 170, each of which is used for electrically connecting the positive electrodes of at least two cells 130 or electrically connecting the negative electrodes of at least two cells 130. In this example, the tab 170 may be disposed on the first end covers 1403 and the second end covers 1404. The shape of the tab 170 is related to the number of cells 130 connected to the tab 170. For example, the tab 170 is basically in the shape of a vertical strip and can be used for electrically connecting the positive electrodes of a column of cells 130 or electrically connecting the negative electrodes of a column of cells 130. The tab 170 described in this example is not a tab in the traditional sense. In the present application, the tab may be understood as a cell connection piece for electrically connecting at least two cells 130.

In an example, the cell holder 140 may be divided into two detachable holder sections along a direction perpendicular to the extension direction of the cell accommodation cavity 1041. After the cells 130 are placed in the cell accommodation cavities 1401, the two holder sections can be snapped together to keep the cells 130 in the cell accommodation cavities 1401.

In this example, each cell accommodation cavity 1401 accommodates one cell 130, and adjacent cells 130 are not in direct contact with each other but are isolated by the cavity walls of the cell accommodation cavities 1401. Therefore, when slight thermal runaway occurs in each cell 130 within the respective cell accommodation cavity 1401, the adjacent cells 130 are not affected. The so-called slight thermal runaway means that the thermal runaway of the cell 130 can be blocked by the cavity wall of the cell accommodation cavity 1401, without breaking through the cavity wall and spreading to the adjacent cell accommodation cavity 1401. In this example, the thermal deformation temperature of the cell holder 140 is greater than or equal to 500°C. Alternatively, the thermal deformation temperature of the cell holder 140 is greater than or equal to 550°C. Alternatively, the thermal deformation temperature of the cell holder 140 is greater than or equal to 600°C. Alternatively, the thermal deformation temperature of the cell holder 140 is greater than or equal to 650°C. For example, if the thermal deformation temperature of the cell 130 is less than 500°C, the cavity wall of the cell accommodation cavity 1401 is not thermally deformed, thereby preventing the thermal runaway of one cell 130 from causing damage to multiple cells 130 in the battery pack 100. In this manner, the harm of thermal runaway of the battery pack 100 can be reduced.

In this example, the density of the cell holder 140 is greater than or equal to 1 g/cm³. The density of the cell holder 240 may be greater than or equal to 1 g/cm³ and less than or equal to 5 g/cm³, or the density of the cell holder 240 may be greater than or equal to 1.5 g/cm³ and less than or equal to 2 g/cm³, or the density of the cell holder 240 may be greater than or equal to 1.5 g/cm³ and less than or equal to 4 g/cm³.

In this example, the cell holder 140 is made of a flame-retardant thermoplastic material that inhibits the spread of thermal runaway. The material may include at least polyamide, lubricants, antioxidants, surfactants, toughening agents, non-toxic flame retardants, reinforcing material, and reinforcing modifiers. Polyamide is nylon 6, nylon 66, or a combination thereof, and the weight percentage of polyamide may be 20% to 50%. The weight percentage of lubricants may be 0.1% to 3%. The weight percentage of toughening agents may be 0.1% to 30%. The non-toxic flame retardants may include at least metal polyphosphates, melamine phosphates, melamine cyanurate, phosphate esters, borates, or a mixture thereof, and the weight percentage of the non-toxic flame retardants may be 3% to 50%. The reinforcing modifiers may be metal oxides and their derivatives, metal hydroxides and their derivatives, or metal silicates, and the weight percentage of the reinforcing modifiers is 8% to 40%. The reinforcing material may be glass fiber, mineral fiber, or kaolin, and the weight percentage of the reinforcing material is 0 to 25%.

In this example, the heat transfer coefficient of the cell holder 140 may vary with temperature. For example, the heat transfer coefficient of the cell holder 140 at the first temperature is greater than or equal to 0.5 W/m·K, and the heat transfer coefficient of the cell holder 140 at the second temperature is less than or equal to 0.05 W/m·K. The first temperature may be a temperature range, for example, 0°C to 500°C, and the second temperature may also be a temperature range, for example, greater than 500°C. When the temperature is relatively low, the cell holder 140 has a good heat dissipation effect, ensuring the normal charging and discharging of the battery pack 100. When the temperature is relatively high and thermal runaway occurs or is about to occur in the cell 130 within the battery pack 100, the cell holder 140 has a strong ability to prevent thermal conduction, thereby preventing the cell 130 from being affected by the adjacent cell 130 in which thermal runaway occurs. In other examples, the heat transfer coefficient of the cell holder 140 at the first temperature and/or the second temperature can be adjusted by modifying the material forming the cell holder 140. For example, the heat transfer coefficient of the cell holder 140 at the first temperature is greater than or equal to 0.5 W/m·K, and the heat transfer coefficient of the cell holder 140 at the second temperature is less than or equal to 0.03 W/m·K. Alternatively, the heat transfer coefficient of the cell holder 140 at the first temperature is greater than or equal to 0.7 W/m·K, and the heat transfer coefficient of the cell holder 140 at the second temperature is less than or equal to 0.02 W/m·K. Alternatively, the heat transfer coefficient of the cell holder 140 at the first temperature is greater than or equal to 0.8 W/m·K, and the heat transfer coefficient of the cell holder 140 at the second temperature is less than or equal to 0.015 W/m·K.

The housing 110 of the battery pack 100 is strong or thick or is wrapped with a rubber layer to prevent the battery pack 100 from being damaged when the battery pack 100 falls. If the positive and negative electrodes of the cell 130 in the cell module 131 in the battery pack 100 are directly facing the housing 110, since the first end cover 1403 and the second end cover 1404 are semi-closed end covers, after thermal runaway occurs in the cell 130, thermal runaway easily spreads to the part of the housing 110 corresponding to the positive or negative electrode of the cell 130, or thermal runaway spreads to the adjacent cells 130 through the semi-closed end covers.

To avoid this case, the battery pack 100 further includes exhaust housings 150. As shown in FIG. 5, the exhaust housings 150 are disposed on the two end surfaces of the cell module 131, that is, the exhaust housing 150 is disposed on the end surface formed by the cell holder 140 and the positive electrodes of the cells 130, and the exhaust housing 150 is also disposed on the end surface formed by the cell holder 140 and the negative electrodes of the cells 130. Two exhaust housings 150 may be provided in the battery pack 100 with one cell module 131.

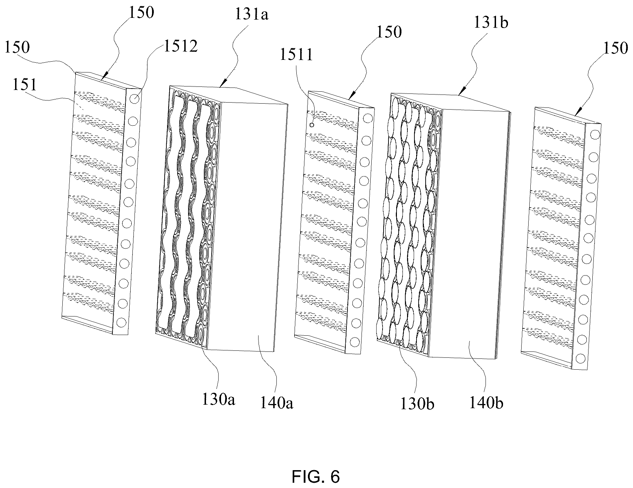

As shown in FIG. 6, multiple first cells 130a extending in a direction perpendicular to a first plane are arranged in the first plane, multiple second cells 130b extending in a direction perpendicular to a second plane are arranged in the second plane, a first cell holder 140a supports the first cells 130a, and a second cell holder 140b supports the second cells 130b. The first cells 130a and the first cell holder 140a form a first cell module 131a, and the second cells 130b and the second cell holder 140b form a second cell module 131b. The positive electrode of the first cell 130a corresponds to the positive electrode of the second cell 130b, or the negative electrode of the first cell 130a corresponds to the positive electrode of the second cell 130b, or the negative electrode of the first cell 130a corresponds to the negative electrode of the second cell 130b, or the positive electrode of the first cell 130a corresponds to the negative electrode of the second cell 130b. A certain distance exists between the first cells 130a and the corresponding second cells 130b. The exhaust housing 150 may be disposed between the first cells 130a and the corresponding second cells 130b. The exhaust housing 150 is disposed between the first cell module 131a and the second cell module 131b. In this example, the exhaust housing 150 is also disposed on an end surface of the first cell module 131a facing away from the second cell module 131b, and the exhaust housing 150 is also disposed on an end surface of the second cell module 131b facing away from the first cell module 131a. Three exhaust housings 150 may be provided in the battery pack 100 with two cell modules 131.

In an example, the number of exhaust housings 150 in the battery pack 100 is greater than the number of cell modules 131. For example, the number of exhaust housings 150 is one more than the number of cell modules 131.

In this example, the material properties, density, heat transfer coefficient, and thermal deformation temperature of the exhaust housing 150 are consistent with or basically the same as those of the cell holder 140, and the details are not repeated here.

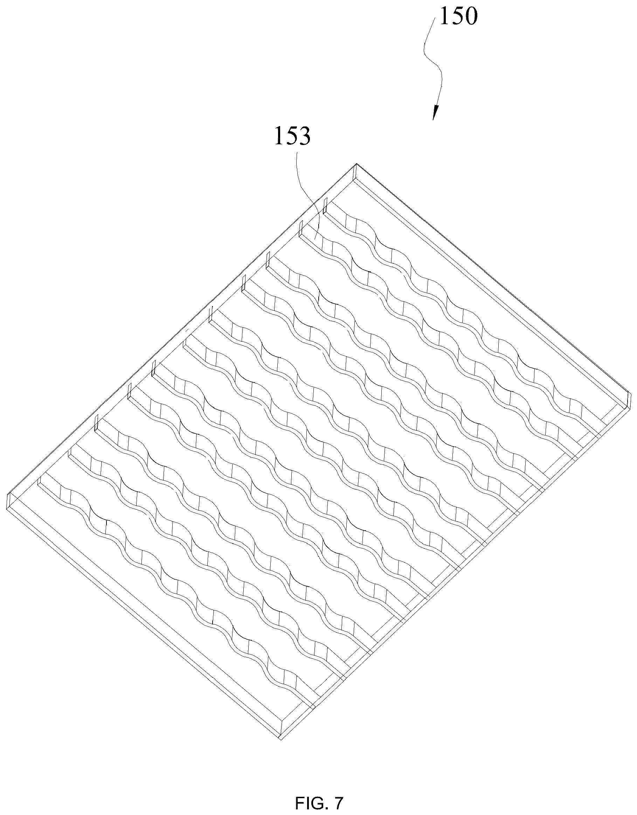

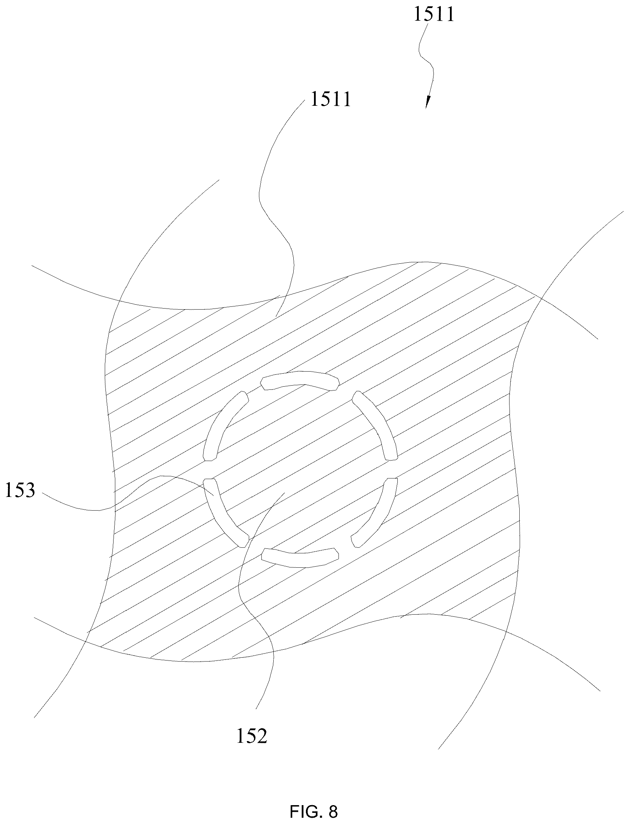

As shown in FIGS. 6 and 7, the exhaust housing 150 forms at least one exhaust channel 151. FIG. 8 is a view directly illustrating the internal structure of the exhaust housing 150 after an end surface with an air inlet portion 1511 is removed. The extension direction of the exhaust channel 151 is basically perpendicular to the extension direction of the cell 130. The exhaust channel 151 may be curved, and the curved shape may be consistent with the curved shape in the cross section formed after the cells 130 are arranged in the cell holder 140 so that the structure of the battery pack 100 can be more compact. In an example, a baffle 153 is disposed between adjacent exhaust channels 151.

The exhaust channel 151 includes air inlet portions 1511 and an air outlet 1512. The air inlet portion 1511 corresponds to the positive or negative electrode of the cell 130, and the air outlet 1512 may correspond to a window (not shown) on the housing 110. In this example, the air inlet portions 1511 are disposed on an end surface of the exhaust housing 150 adjacent to the cell holder 140, and the positive or negative electrode of each cell 130 corresponds to one air inlet portion 1511. The number of air inlet portions 1511 on each exhaust housing 150 is consistent with the number of cells 130. Only one air inlet portion 1511 is shown in FIGS. 5 and 5, and the other air inlet portions 1511 are not shown. The air outlets 1512 may be disposed on any one or more of the four peripheral sides of the exhaust housing 150. The air outlets 1512 may be closed or semi-closed. The air outlet 1512 shown in FIGS. 5 and 6 corresponds to one end or two ends of each exhaust channel 151.

When a large amount of hot gas is generated due to thermal runaway occurring in the cell 130, the hot gas can enter the exhaust channel 151 through the air inlet portion 1511, thereby preventing the cell 130 in thermal runaway from breaking through the cell accommodation cavity 1401 and damaging the cell 130 therein. It is to be understood that the hot gas can gradually cool down in the exhaust channel 151 or can be discharged out of the battery pack 100 through the air outlet 1512.

In an example, the air inlet portion 1511 is in a closed state at the first temperature and is opened at the second temperature, and the second temperature is greater than the first temperature.

In an example, the air inlet portions 1511 of the exhaust channels 151 may be integrally formed with the exhaust housing 150, that is, the air inlet portion 1511 does not have a substantial opening or gap to allow other substances to enter the exhaust channel 151. In this example, the housing thickness at the air inlet portion 1511 is less than the thickness at other positions of the exhaust housing 150. For example, the housing thickness at the air inlet portion 1511 may be 0.25 times, 0.5 times, or 0.3 times the housing thickness at other positions. Therefore, when thermal runaway occurs in the cell 130, a large amount of hot gas can break through the weak housing at the air inlet portion 1511 and enter the exhaust channel 151.

In an example, the air inlet portion 1511 of the exhaust channel 151 may include a stop portion 152 having a stopped state and an open state. When the impact intensity is less than a set value, the stop portion 152 is in the stopped state, and when the impact intensity is greater than the set value, the stop portion 152 is in the open state. In an example, the stop portion 152 may be an exhaust valve, and the exhaust valve is closed when the impact intensity is less than the set value and is opened when the impact intensity is greater than the set value. In an example, as shown in FIG. 8, the stop portion 152 may be a stop housing formed by the exhaust housing 150, and multiple through holes 153 are provided around the stop portion 152. Due to the existence of the through holes 153, the strength of the exhaust housing 150 between adjacent through holes 153 is reduced. When thermal runaway occurs in the cell 130, the exhaust housing 150 between adjacent through holes 153 can be easily broken. In some examples, the air inlet portion 1511 may also be a through hole of any shape, for example, a circular hole.

In an example, the outdoor wheeled device 200 may be equipped with at least two battery packs 100, for example, a first battery pack and a second battery pack that are used for powering a traveling electric motor. The first battery pack includes multiple third cells and a third cell holder supporting the third cells, and the second battery pack includes fourth cells and a fourth cell holder supporting the fourth cells. In this example, the material properties, densities, heat transfer coefficients, and thermal deformation temperatures of the third cell holder and the fourth cell holder at the same temperature may be the same or different. For example, the heat transfer coefficients of the third cell holder and/or the fourth cell holder at the second temperature are less than or equal to 0.05 W/m·K. In this example, there are no specific restrictions on the nominal voltage, output power, maximum continuous output power, or cell materials of the two battery packs. In this example, the first battery pack and the second battery pack may be mounted in the same battery pack mounting portion or may be mounted in different battery pack mounting portions, respectively. Alternatively, the first battery pack is non-detachably fixed in the tool body, and the second battery pack is detachably mounted in the battery pack mounting portion. Alternatively, the second battery pack is non-detachably fixed in the tool body, and the first battery pack is detachably mounted in the battery pack mounting portion.

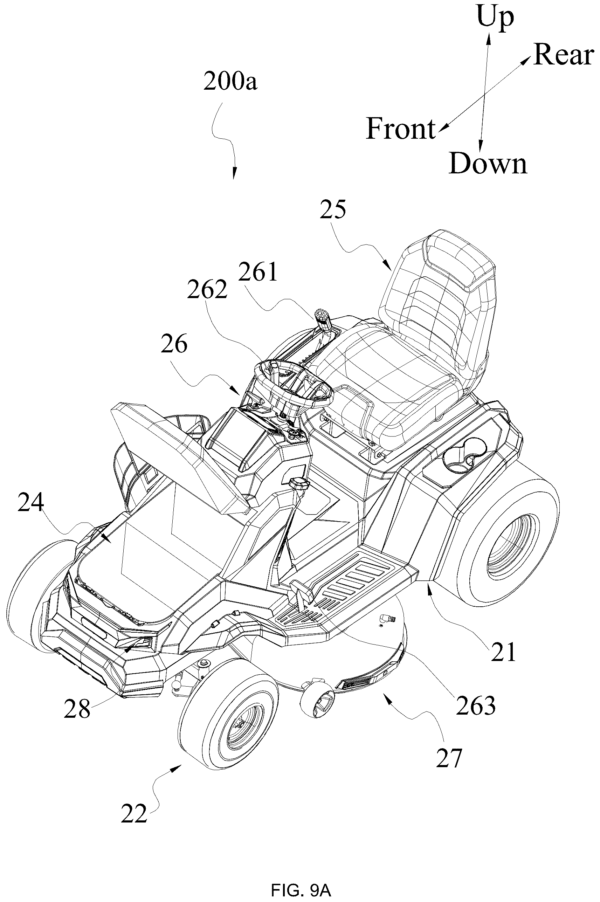

In the following examples, a riding mower 200a is used as an example for description. The riding mower 200a described with reference to FIG. 9A may include at least a vehicle frame 21, traveling wheels 22 supporting the vehicle frame 21, an electric motor 23 capable of driving at least the traveling wheels 22, and a battery compartment 24 for accommodating the battery pack 100. The mower 200a may further include a seat 25 and an operating assembly 26 that are disposed on the vehicle frame 21. The operating assembly 26 may include an operating lever 261, a steering wheel 262, or a pedal 263. The mower 200a may further include a cutting assembly 27 disposed at the lower end of the vehicle frame 21 or an illumination device 28 disposed at the front end of the vehicle frame 21.

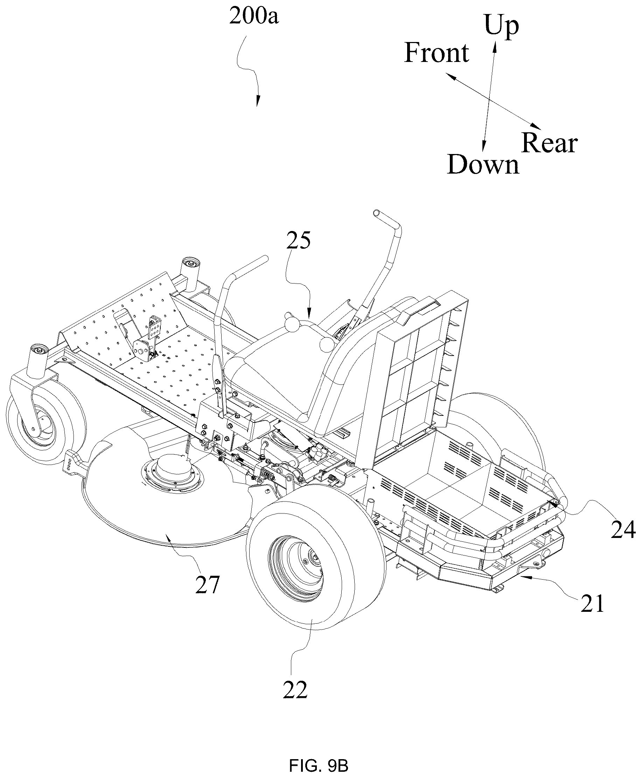

In some examples, the battery compartment 24 may be disposed at the rear end, front end, bottom end, or side surface of the vehicle frame 21. In the mower 200a shown in FIG. 9A, the battery compartment 24 is disposed at the front end of the vehicle frame 21. In the mower 200a shown in FIG. 9B, the battery compartment 24 is disposed at the rear end of the vehicle frame 21. The positions of the battery compartment 24 on the mower 200a or other wheeled tools are not listed here one by one.

During use, the battery pack 100 may have a risk of thermal runaway as charging or discharging continues. After thermal runaway occurs, the battery pack 100 may explode or catch fire, which may be a serious safety accident. If thermal runaway occurs in the battery pack 100 on the outdoor wheeled tool 200, thermal runaway is a major safety accident for the tool itself. If the battery compartment 24 is designed to be adjacent to the seat 25, the user is likely to be injured.

To reduce the hazards caused by thermal runaway of the battery pack 100, the battery pack 100 may further include a pressure relief device 14. The pressure relief device 14 can discharge the hot gas in the battery pack 100 or prevent the leakage of open flames when thermal runaway occurs in the battery pack 100, thereby preventing the battery pack 100 from exploding or preventing the battery pack 100 from further damaging the battery compartment 24 or other structures.

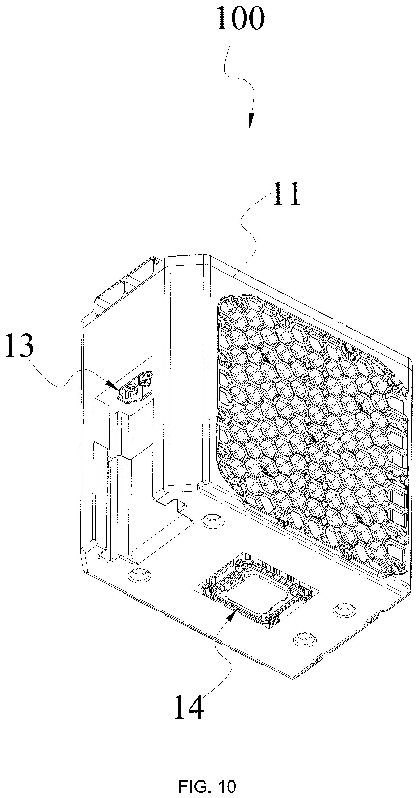

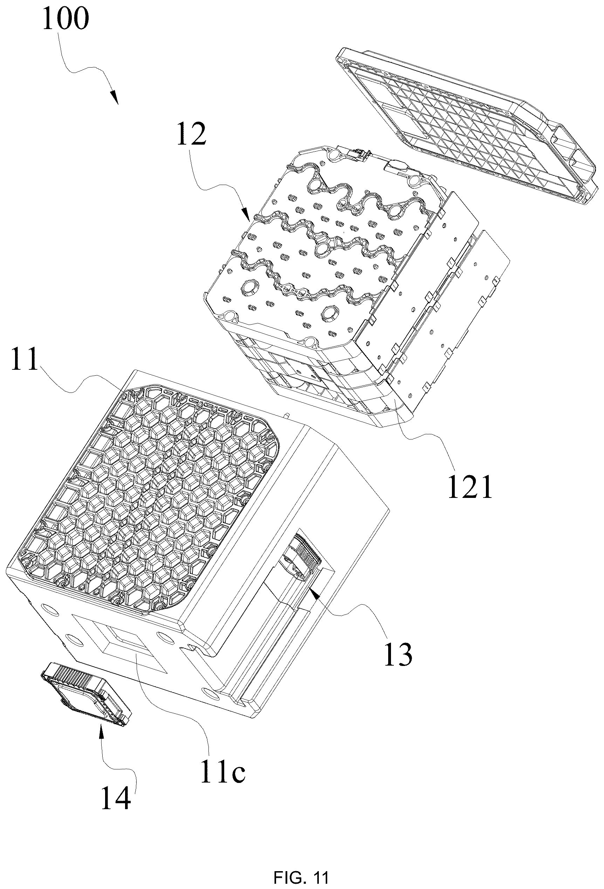

In an example, referring to FIGS. 10 to 12, the pressure relief device 14 may be disposed on a housing 11 and include at least a waterproof and breathable layer 141 and at least one layer of metal mesh 142. The pressure relief device 14 may be detachably mounted on a mounting port 11c of the housing 11 by means of screws or plugging or may be fixedly mounted on the housing 11 by other means.

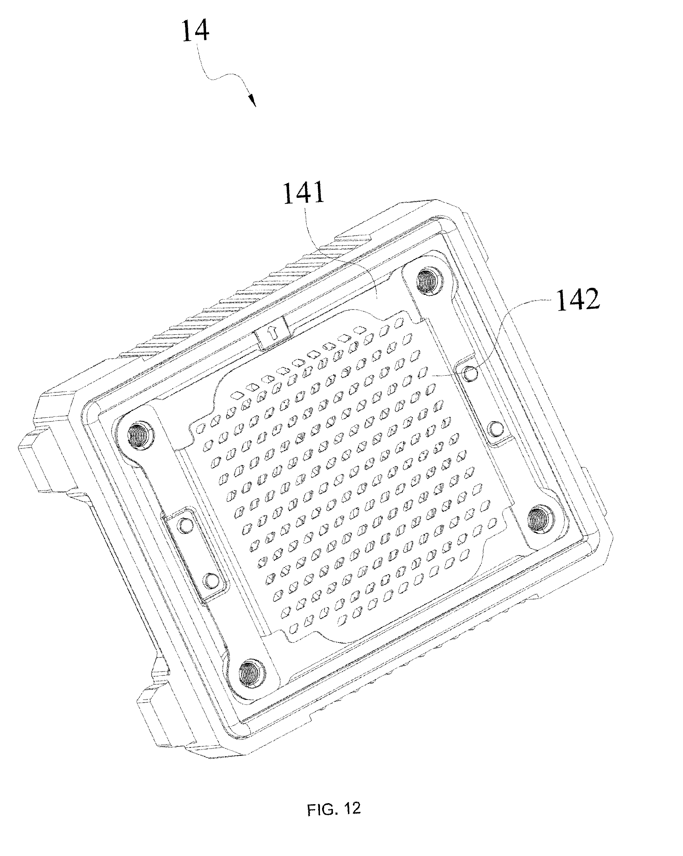

Referring to FIGS. 12 to 14, the metal meshes 142 are disposed on the inner side of the waterproof and breathable layer 141. When the air pressure inside the housing 11 of the battery pack 100 is basically balanced with the external air pressure, the pressure relief device 14 is basically in a balanced state and does not affect the normal use of the battery pack 100. When thermal runaway occurs in the battery pack 100, a cell unit 121 in thermal runaway may quickly discharge hot gas, the air pressure in the battery pack 100 increases rapidly, and then the pressure relief device 14 is in a pressure imbalance state. In an example, when the air pressure inside the battery pack 100 is greater than the external air pressure, the pressure relief device 14 may deform. For example, the pressure relief device 14 may bulge from the inside out, or at least the waterproof and breathable layer 141 may bulge outward. When the air pressure inside the battery pack 100 is large enough, the hot gas may break through the pressure relief device 14 or break through at least the waterproof and breathable layer 141 so that the hot gas inside the battery pack 100 can be discharged outside the battery pack 100. The metal meshes 142 are disposed on the inner side of the waterproof and breathable layer 141 so that when thermal runaway occurs in the battery pack 100 and an open flame occurs, the metal meshes 142 can block the open flame inside the battery pack 100 to a certain extent.

In an example, the waterproof and breathable layer 141 ruptures when the air pressure inside the battery pack 100 is greater than or equal to 2 kPa, or ruptures when the air pressure inside the battery pack 100 is greater than or equal to 3 kPa, or ruptures when the air pressure inside the battery pack 100 is greater than or equal to 3 kPa, or ruptures when the air pressure inside the battery pack 100 is greater than or equal to 4 kPa.

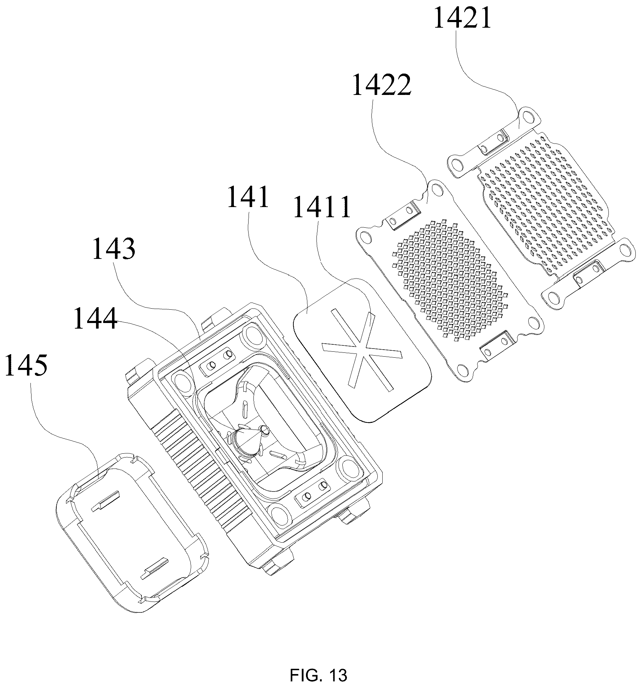

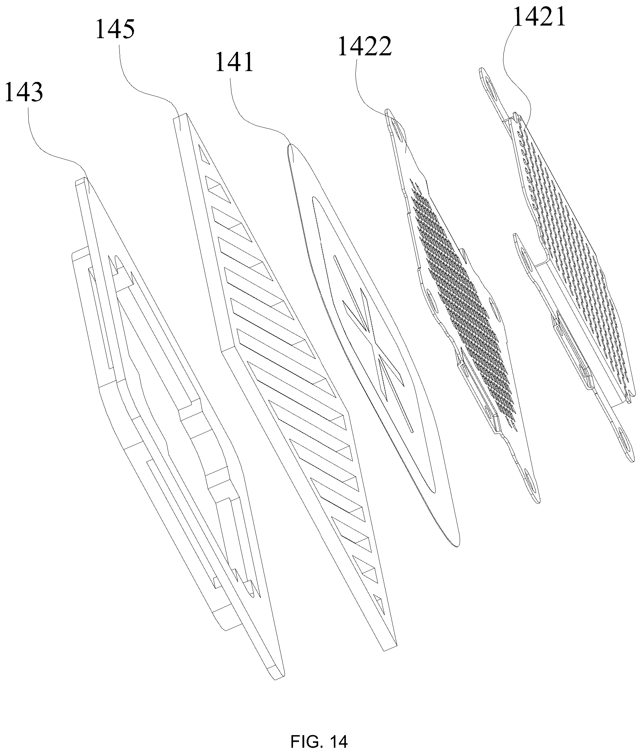

In an example, the waterproof and breathable layer 141 is provided with a pre-indentation 1411 as shown in FIGS. 13 and 14. The thickness of the film at the pre-indentation 1411 is less than those at other positions, making the film at the pre-indentation 1411 easier to rupture. In an example, the shape of the pre-indentation 1411 may be a "*" shape, a "+" shape, or any other shape.

In an example, the waterproof and breathable layer 141 may be a waterproof and breathable film, a waterproof and breathable valve, an aluminum-plastic film, or the like.

In an example, the metal meshes 142 may include a first metal mesh 1421 and a second metal mesh 1422 that are adjacent to each other, and the first metal mesh 1421 is disposed on the inner side of the second metal mesh 1422. The mesh holes of the two metal meshes at least partially do not overlap, thereby increasing the mesh hole density of the metal meshes 142 and enhancing the ability of the metal meshes 142 to block open flames.

In an example, the pressure relief device 14 is disposed on the bottom housing, on the side surface, or at other positions of the battery pack 100. In an example, the battery pack 100 may be provided with multiple pressure relief devices 14, and the multiple pressure relief devices 14 may be disposed on the same surface of the battery pack 100 or on different surfaces of the battery pack 100.

In an example, the pressure relief device 14 further includes a protection bracket 143 detachably mounted on the housing 11. The waterproof and breathable layer 141 and the metal meshes 142 are detachably mounted to the protection bracket 143 or non-detachably mounted to the protection bracket 143. In an example, the hardness of the protection bracket 143 is less than or equal to the hardness of the housing 11.

In an example, the pressure relief device 14 further includes a puncture needle 144. The puncture needle 144 is disposed on the outer side of the waterproof and breathable layer 141. When the waterproof and breathable layer 141 bulges outward to a certain extent, the waterproof and breathable layer 141 is in contact with the puncture needle 144, and the puncture needle 144 can puncture the waterproof and breathable layer 141. In this manner, it is ensured that the waterproof and breathable layer 141 can rupture to discharge the hot gas or smoke in the battery pack 100 after thermal runaway occurs in the battery pack 100. In an example, the puncture needle 144 may be a conical protrusion with a pointed end facing the waterproof and breathable layer 141. In an example, the puncture needle 144 may be formed from the protection bracket 143.

In some examples, when the battery pack 100 is placed on an uneven surface, the bumps on the ground may puncture the waterproof and breathable layer 141 of the pressure relief device 14 from the outside to the inside, thereby damaging the battery pack 100. Alternatively, the user may accidentally break the waterproof and breathable layer 141 while moving the battery pack 100. To prevent the pressure relief device 14 from being triggered before thermal runaway occurs in the battery pack 100, the battery pack 100 is further provided with a protection structure 145. The protection structure 145 is disposed on the outer side of the waterproof and breathable layer 141. In an example, the protection structure 145 is detachably mounted on the outer side of the protection bracket 143, or detachably mounted on the housing 11, or integrally formed with the protection bracket 143, or mounted on the inner side of the protection bracket 143. In an example, the protection structure 145 may be a fence structure as shown in FIG. 14. In an example, when the battery pack 100 is not mounted to the outdoor wheeled tool 200, the protection structure 145 is mounted on the battery pack 100. When the battery pack 100 needs to be mounted onto the outdoor wheeled tool 200 to power the tool, the protection structure 145 may be removed from the battery pack 100 to avoid affecting the triggering of the pressure relief device 14.

In the preceding example, the pressure relief device 14 on the housing of the battery pack may be used as a heat dissipation device for the battery pack 100 when the battery pack 100 does not have a thermal runaway problem. In this manner, the pressure relief device 14 can dissipate heat for the battery pack, and when thermal runaway occurs in the battery pack, the pressure relief device 14 can quickly discharge the hot gas or smoke in the battery pack 100 and prevent open flames from leaking out, thereby avoiding more serious safety accidents.

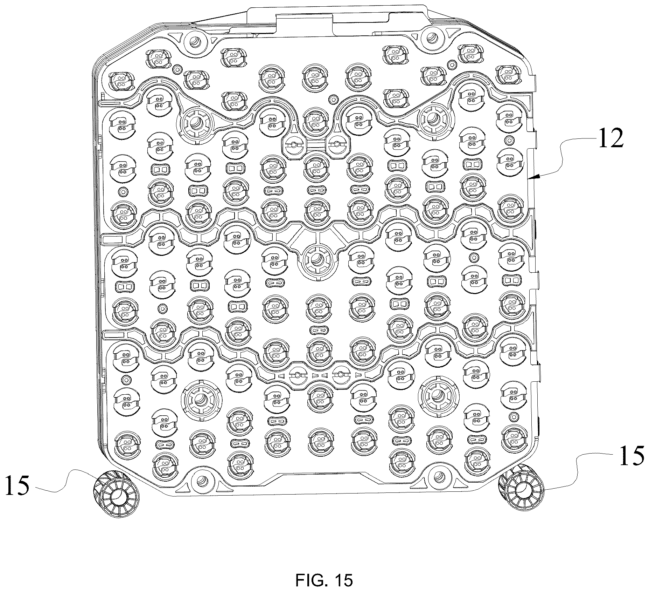

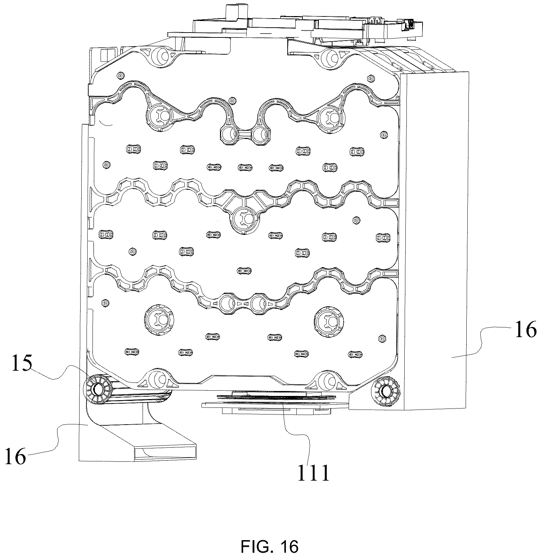

Referring to FIGS. 15 and 16, the battery pack 100 may further include energy conversion devices 15 disposed in the housing 11 and thermally connected to multiple cell units 12. The energy conversion device 15 can at least perform energy conversion from thermal energy to kinetic energy. The energy conversion device 15 can convert the thermal energy in the battery pack 100 into kinetic energy, thereby discharging the hot gas in the battery pack. As shown in FIGS. 15 and 16, the energy conversion device 15 may be a fan. In an example, the energy conversion device 15 may be a centrifugal fan. In an example, the fan 15 may be disposed at the corner of the accommodation space formed by the housing 11. If thermal runaway occurs in the battery pack 100, the hot gas in the battery pack 100 can drive the fan to rotate and be discharged circumferentially from the blades of the fan 15 under the action of the centrifugal force. In an example, at least one air outlet opening is disposed on the housing 11, and the air outlet opening partially or fully corresponds to an exhaust port of the fan 15. In an example, flow guide members 16 are further disposed in the housing 11, and the flow guide member 16 can guide the airflow discharged from the fan 15 toward a pressure relief port 112 on the housing 11.

In an example, the radial dimension of the fan 15 is greater than or equal to 50 mm, or greater than or equal to 55 mm, or greater than or equal to 60 mm.

In the preceding example, by providing the energy conversion devices 15 in the battery pack 100, the thermal energy of the battery pack in thermal runaway can be converted into kinetic energy and discharged.

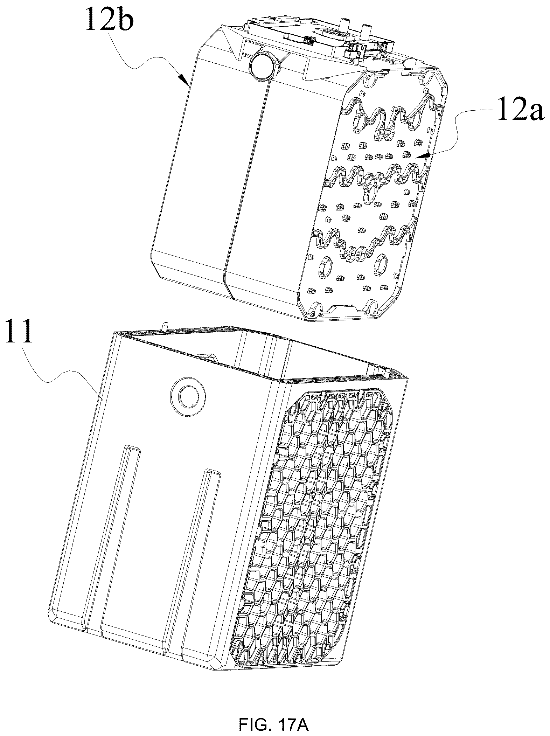

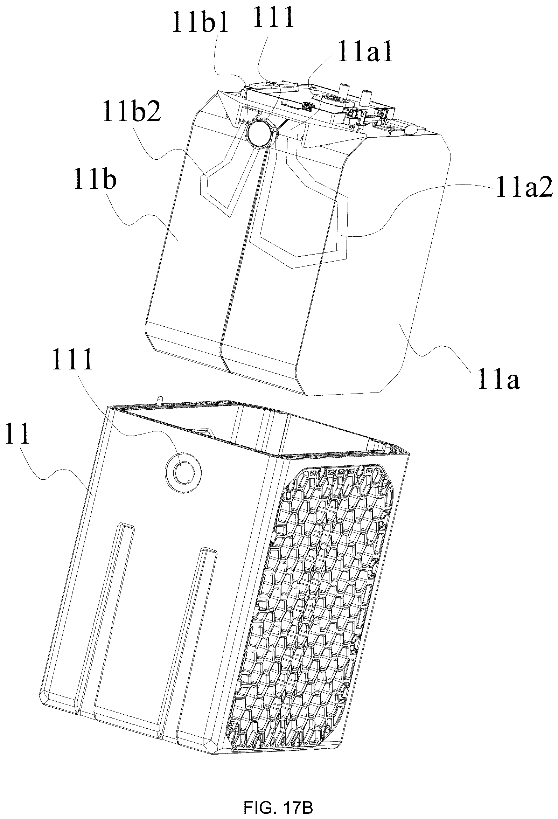

Referring to FIGS. 17A and 17B, the battery pack 100 includes at least a first cell module 12a and a second cell module 12b. The first cell module 12a and the second cell module 12b are disposed in a first compartment 11a and a second compartment 11b, respectively. The first compartment 11a and the second compartment 11b are thermally isolated from each other. In this example, the housing 11 may form the first compartment 11a and the second compartment 11b. In an example, the first compartment 11a and the second compartment 11b may be two independent inner housings that are disposed inside the housing 11, separated from the housing 11, and thermally isolated from each other. The so-called thermal isolation may be understood as no or almost no heat transfer between the two compartments. In this manner, thermal runaway occurring in one cell module does not affect the other cell module or the impact on the other cell module is relatively small. The first cell module 12a and the second cell module 12b are connected in parallel. After one cell module fails, the other cell module can still support charging and discharging.

In an example, the heat transfer coefficient of the material of the first compartment 11a and the second compartment 11b at room temperature is greater than or equal to 25 W/m·K, or greater than or equal to 30 W/m·K, or greater than or equal to 35 W/m·K, or greater than or equal to 40 W/m·K. For example, in an example, the yield strength of the material of the first compartment 11a and the second compartment 11b is greater than or equal to 150 MPa, or greater than or equal to 160 MPa, or greater than or equal to 170 MPa, or greater than or equal to 180 MPa, or greater than or equal to 190 MPa. In an example, the material of the first compartment 11a and the second compartment 11b may include at least one of PV6 and flame-retardant nylon.

For example, as shown in FIG. 17B, the first compartment 11a may be provided with or formed with a first pressure relief port 11a1, and the second compartment 11b may be formed with or provided with a second pressure relief port 11b1. A first pressure relief channel 11a2 is formed on the outer side of the first compartment 11a, and a second pressure relief channel 11b2 is formed on the outer side of the second compartment 11b. The first pressure relief port 11a1 may be used as a port of the first pressure relief channel 11a2, that is, a first inlet, and the second pressure relief port 11b1 may be used as a port of the second pressure relief channel 11b2, that is, a second inlet. A pressure relief valve 111 is formed on the housing 11, and the pressure relief valve 111 may be provided at the outlet of the first pressure relief channel 11a2 and the outlet of the second pressure relief channel 11b2. The outlet of the first pressure relief channel 11a2 is the pressure relief valve 111, and the outlet of the second pressure relief channel 11b2 is also the pressure relief valve 111. When multiple compartments are provided in the battery pack 100, the multiple compartments may discharge the hot gas or smoke in the compartments by connecting respective pressure relief channels to the pressure relief valve 111 of the housing 11.

In this example, the first pressure relief channel 11a2 may be an airflow channel of any shape formed by the inward depression of the first compartment 11a or may be a hollow airflow channel formed by the compartment body of the first compartment 11a. The second pressure relief channel 11b2 and the first pressure relief channel 11a2 may be formed in the same manner or shape or in different manners or shapes.

In an example, to increase the time that hot gas circulates in the pressure relief channel 11a2, the first pressure relief channel 11a2 and the second pressure relief channel 11b2 may be designed as curved channels, or buffer structures such as buffer protrusions or buffer sheets may be provided in the channels.

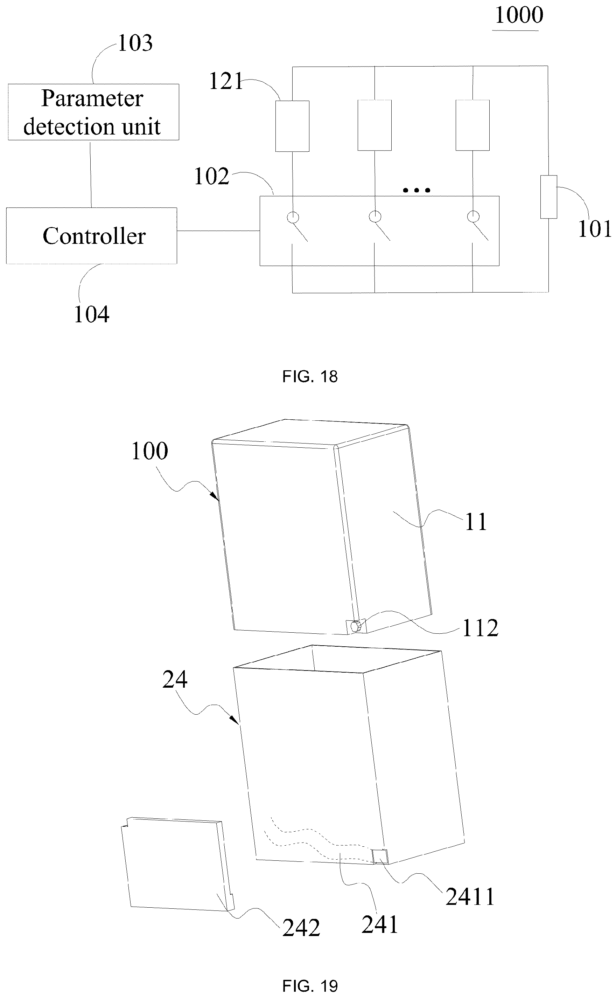

In an example, the risk of thermal runaway of the battery pack may be reduced through electronic components. A circuit structure 1000 in the battery pack 100 shown in FIG. 18 includes at least one discharge resistor 101, multiple switching elements 102, a parameter detection unit 103, and a controller 104. The multiple switching elements 102 are electrically connected to multiple cell units 121, respectively and electrically connected to the discharge resistor 101. The parameter detection unit 103 can detect at least the battery parameters of the battery pack 100. The controller 104 is configured to determine whether the battery pack is at risk of thermal runaway according to the battery parameters and when determining that the battery pack 100 is at risk of thermal runaway, control at least one switching element 102 to be turned on so that the discharge of the cell unit 121 electrically connected thereto can be performed through the discharge resistor 101.

In this example, the parameter detection unit 103 can detect at least the temperature of the cell units 121, or the ambient temperature inside the battery pack 100, or the air pressure inside the battery pack 100. The controller 104 may determine that the battery pack 100 is at risk of thermal runaway when the battery parameter is greater than or equal to a parameter threshold. For example, when the temperature inside the battery pack 100 is greater than a temperature threshold, the controller 104 may determine that the battery pack 100 is at risk of thermal runaway. After determining that the battery pack 100 is at risk of thermal runaway, the controller 104 may select at least one cell unit 121 to perform discharging through the discharge resistor 101 according to the battery level or temperature of the cell unit 121. For example, the controller 104 may select the cell unit 121 with the highest battery level to perform discharging, or the controller 104 may select the cell unit 121 with a high temperature to perform discharging, or the controller 104 may select the cell unit 121 to be discharged after comprehensively considering the temperature and battery level. In this example, two or more cell units 121 may be connected in parallel and discharged through the discharge resistor 101.

When the cell unit 121 is discharged through the discharge resistor 101, the controller 104 may detect the remaining power of the discharged cell unit and when the remaining power is less than or equal to a power threshold, control the switching element 102 to be turned off so that the resistor stops discharging. Generally, the preceding power threshold is less than or equal to 50% of the total power of the cell unit.

In this example, the discharge resistor 101 may be disposed between the housing 11 and the multiple cell units 121 or disposed near the housing 11, thereby better transferring heat through the discharge resistor 101.

After the battery pack 100 is mounted to the outdoor wheeled tool 200, if thermal runaway occurs on the tool, safety hazards to the tool exist. Therefore, to avoid or minimize the harm of thermal runaway of the battery pack 100 to the outdoor wheeled tool 200, as shown in FIG. 19, an airflow channel 241 is provided or formed on the battery compartment 24 of the outdoor wheeled tool 200. The pressure relief port 112 is formed on the housing 11 of the battery pack 100, the pressure relief port 112 of the battery pack 100 is connected to an end of the airflow channel 241 on the battery compartment 24, and the other end of the airflow channel 241 is connected to the external atmosphere so that the hot gas or smoke discharged from the battery pack 100 can be discharged to the atmosphere outside the battery compartment 24 through the airflow channel 241 on the battery compartment 24. The pressure relief port 112 on the battery pack 100 may be the same as or different from the pressure relief valve 111 on the battery pack 100 in the preceding example, which is not specifically limited here.

In this example, the battery compartment 24 may accommodate at least one battery pack 200, and the battery compartment 24 is provided with at least one airflow channel 241.

In an example, the airflow channel 241 may also be an opening 2411 on the battery compartment 24 corresponding to the pressure relief port 112 of the battery pack 100, and the length of the airflow channel 241 is basically equal to the wall thickness of the battery compartment 24.

In an example, the airflow channel 241 is a channel having a specific length, and the airflow channel 241 has an air inlet and an air outlet. As shown in FIG. 19, a fireproof cover 242 is provided outside the battery compartment 24. The fireproof cover 242 can cover the opening 2411 of the battery compartment 24, and a certain distance exists between the fireproof cover 242 and the outer wall of the battery compartment 24. In this manner, the airflow channel 241 can be formed between the fireproof cover 242 and the outer wall of the battery compartment 24, and the opening 2411 of the battery compartment 24 is used as the air inlet of the airflow channel 241. At least one side of the fireproof cover 242 is disconnected from the outer wall of the battery compartment 24 to form the air outlet of the airflow channel 241. In this example, the fireproof cover 242 may be fixedly mounted on the battery compartment 24 or can be detachably mounted on the battery compartment 24.

In an example, the airflow channel 241 may be a channel formed by the hollow wall of the battery compartment 24.

To increase the time that hot gas circulates in the airflow channel 241, a buffer structure, such as a buffer protrusion or a buffer sheet, may be disposed in the airflow channel 241. Alternatively, the airflow channel 241 may be configured to be a curved channel.

In an example, a fireproof structure may be provided in the airflow channel 241. For example, a metal mesh may be provided as a fireproof structure to prevent open flames from escaping from the battery compartment 24 after thermal runaway of the battery pack 100.

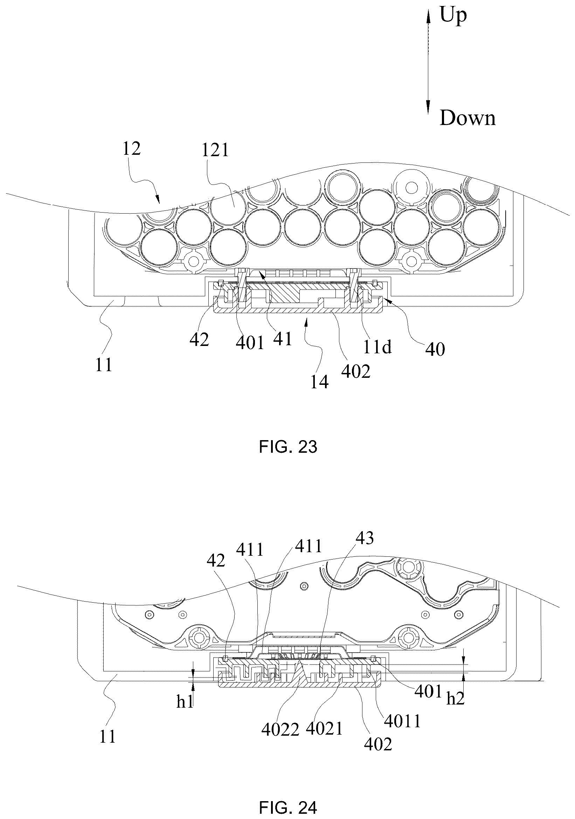

In an example, the airflow channel 241 formed by the battery compartment 24 can at least guide the hot gas after thermal runaway of the battery pack 100 to the bottom of the battery compartment 24 for discharge. As shown in FIGS. 23 and 24, multiple openings 2431 may be provided on a compartment base plate 243 at the bottom of the battery compartment 24, and the openings 2431 can discharge the airflow to the external atmosphere. In this example, the opening 2431 on the compartment base plate 243 may be the airflow channel 241, and the thickness of the compartment base plate 243 may be the length of the airflow channel 241. By providing multiple openings 2431 on the compartment base plate 243, the hot gas discharged by the battery pack 100 can be guided to the bottom of the outdoor wheeled tool 200, thereby isolating the heat source from the user on the tool and avoiding harm to the user on the tool 200.

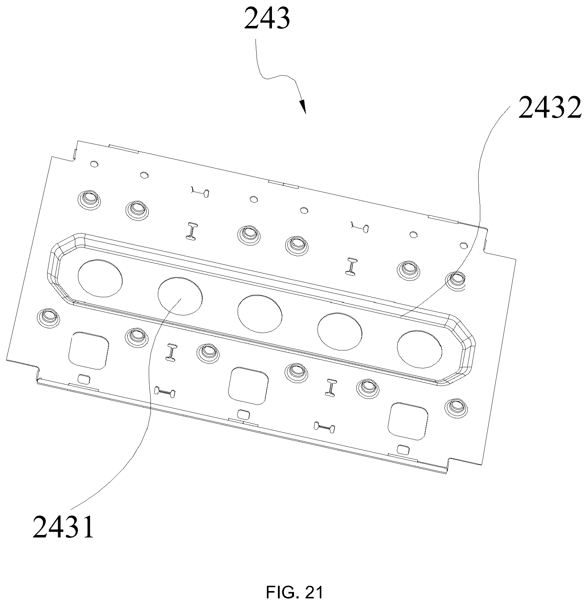

In an example, at least a portion of the compartment base plate 243 may be recessed outward to form a groove 2432. For example, as shown in FIG. 21, the middle portion of the compartment base plate 243 may be recessed outward to form a rectangular groove 2432. The multiple openings 2431 are provided in the groove 2432. In this example, the groove 2432 can gather or converge the hot gas in the battery compartment 24 to a certain extent and guide the hot gas to the external atmosphere through the openings 2431.

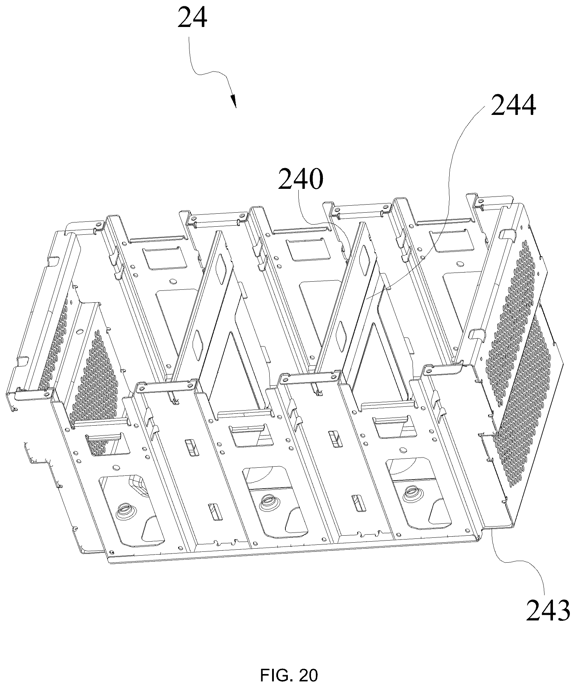

With continued reference to FIG. 20, at least one smoke exhaust channel 244 may be formed on the sidewall or top compartment cover of the battery compartment 24 to provide a path for gas or smoke to be discharged so that the gas or smoke in the battery compartment 24 can quickly converge to the openings 2431 on the compartment base plate 243 and be discharged out of the battery compartment 24. In an example, the groove on the sidewall or top compartment cover of the battery compartment 24 may be used as the smoke exhaust channel 244.

In this example, at least one wall of the battery compartment 24 is a mesh structure, or at least one sidewall of the battery compartment 24 is a mesh structure. For example, the compartment wall with a mesh structure may be a metal mesh, a hard plastic mesh, or a mesh made of other materials.

In this example, the main material of the compartment body of the battery compartment 24 may be an iron-based alloy, a nickel-based alloy, a cobalt-based alloy, a copperbased alloy, or the like.

In this example, the melting point of the main material of the compartment body of the battery compartment 24 is greater than or equal to 1000°C, or greater than or equal to 1200°C, or greater than or equal to 1400°C, or greater than or equal to 1500°C.

With continued reference to FIG. 20, the battery compartment 24 may include at least two sub-compartments, with a partition 240 provided between at least two adjacent sub-compartments. The partition 240 is at least partially made of a flame-retardant material. In an example, the partition 240 is detachably mounted between two adjacent sub-compartments. In an example, the partition 240 is integrally formed with the battery compartment 24. The material of the partition 240 may be consistent with or at least partially consistent with the main material of the compartment body of the battery compartment 24 or different from the main material of the compartment body of the battery compartment 24.

In an example, the heat transfer coefficient of the flame-retardant material constituting the partition 240 at room temperature is less than or equal to 2 W/m·K, or less than or equal to 1.5 W/m·K, or less than or equal to 1 W/m·K, or less than or equal to 0.5 W/m·K.

In an example, a battery management module may acquire battery data of the battery pack 100 and perform a failure convenience model analysis according to the acquired battery data, thereby obtaining various thermal runaway data combinations. In an example, the battery management module may detect the battery data in real time and compare the thermal runaway data combinations to determine whether thermal runaway occurs or is about to occur in the battery pack and then control the outdoor wheeled tool to enter a shutdown state or control the tool to issue an alarm prompt, for example, issue a buzzer alarm or display alarm information on a display screen. In this example, the battery management module may be provided in the battery pack 100, or in the outdoor wheeled tool 200, or in both the battery pack 100 and the outdoor wheeled tool 200.

In another example, the pressure relief device 14 can at least guide the high-temperature gas generated when thermal runaway occurs in at least one cell unit 121 to be discharged from the housing 11. Alternatively, the pressure relief device 14 can at least prevent open flames generated when thermal runaway occurs in at least one cell unit 121 from escaping from the housing 11. Alternatively, the pressure relief device 14 can prevent open flames generated when thermal runaway occurs in at least one cell unit 121 from escaping from the housing 11 and can at least guide the high-temperature gas generated when thermal runaway occurs in at least one cell unit 121 to be discharged from the housing 11. The high-temperature gas may include high-temperature smoke, dust, or air. In this example, at least the pressure relief device 14 can form a gas communication path between the inside and outside of the housing 11, that is, gas communication between the inside and outside of the housing 11 may be achieved through the pressure relief device 14.

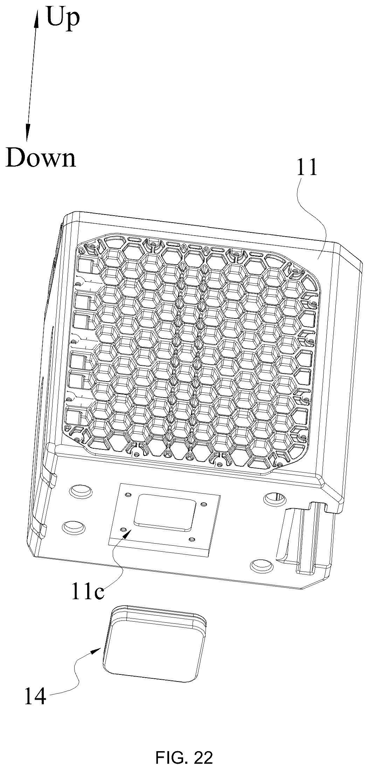

Referring to FIG. 22, the pressure relief device 14 may be mounted at the mounting port 11c of the housing 11 through screws or a snap-fit. Referring to FIG. 23, the pressure relief device 14 is connected to the housing 11 through multiple screws 11d.

In an example, the surface of the housing 11 on which the mounting port 11c is formed is basically flush with the outer surface of the mounted pressure relief device 14, or the surface of the housing 11 on which the mounting port 11c is formed is higher than the outer surface of the mounted pressure relief device 14. In this manner, the following is avoided: since the outer surface of the pressure relief device 14 protrudes from the surface of the housing 11 during storage or use of the battery pack 100, the pressure relief device 14 bears the weight of the entire battery pack 100, and thus the pressure relief device 14 is damaged or mistakenly triggered. In other examples, the surface of the housing 11 at the mounting port 11c may be lower than the outer surface of the mounted pressure relief device 14.

In an example, the pressure relief device 14 may be mounted at the bottom end of the battery pack 100 or on the side surface of the battery pack 100. In principle, the pressure relief device 14 is disposed at an end of the battery pack 100 facing away from the user. For example, in the riding mower 200a, the bottom end of the mower 200a faces the ground and is far away from the operator or users around the machine body. After the battery pack 100 is mounted in the battery compartment 24, the bottom end of the battery pack 100 faces the ground. Therefore, the pressure relief device 14 may be disposed at the bottom end of the battery pack 100 so that when thermal runaway occurs in the battery pack 100 in the riding mower 200a, the high-temperature gas ejected from the battery pack 100 is directed toward the ground, thereby preventing injury to people. In other examples, the mounting position of the pressure relief device 14 on the battery pack 100 is related to the applicable scenario of the battery pack 100 or the type of the applicable power tool, which is not limited here.

In some examples, multiple pressure relief devices 14 may be mounted on the battery pack 100. The positions or numbers of pressure relief devices 14 mounted on battery packs of different types or for different purposes may be different, which is not limited here.

This example is described by using the case where the pressure relief device 14 is mounted at the bottom end of the battery pack 100 as an example with reference to the directions marked in FIGS. 22 to 27. As shown in FIGS. 23 to 27, from top to bottom or from near to far from a cell module 12, the pressure relief device 14 may include a flame arrester assembly 41 and a guide assembly 40. When thermal runaway occurs in one or more cell units 121 in the cell module 12, open flames or high-temperature gas may be generated instantly or in a short period in the accommodation space formed by the housing 11. Since the pressure relief device 14 has a gas communication path with the outside, the high-temperature and high-pressure gas generated in the housing 11 partially impacts the housing 11 and mostly impacts the pressure relief device 14. The flame arrester assembly 41 of the pressure relief device 14 can at least prevent the escape of open flames, while the guide assembly 40 can slow down the flow rate of the gas or lower the temperature of the escaped gas.

With continued reference to FIGS. 23 to 27, the flame arrester assembly 41 may include at least a partition mesh 411, the guide assembly 40 may include a first guide member 401 and a second guide member 402, a separator 43 is further provided between the flame arrester assembly 41 and the guide assembly 40, and a sealing member 42 is further provided between the contact surfaces of the guide assembly 40 and the housing 11.

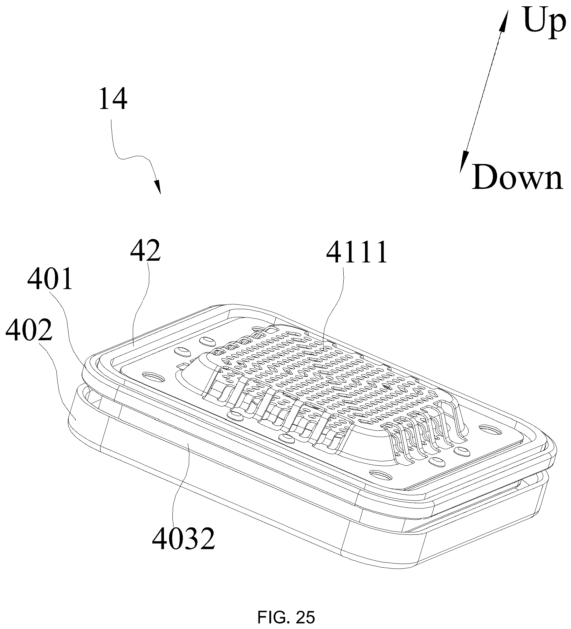

The partition mesh 411 may be a metal mesh and/or metal foam having multiple flame arrester holes 4111. In an example, the partition mesh 411 may be at least two adjacent layers of metal mesh and/or metal foam. The flame arrester holes 4111 may be mesh holes on the metal mesh or holes in the metal foam. On the projection surface perpendicular to the up and down direction, the flame arrester holes 4111 on the two layers of metal meshes at least partially do not overlap, thereby better blocking open flames. In an example, as shown in FIGS. 25 to 27, the upper metal mesh may be convex upward, and the lower metal mesh may be concave downward, thereby forming a larger space between the two metal meshes to ensure a fire-blocking space between the two layers of metal meshes. In this example, as shown in FIG. 22, the opening shape of the mounting port 11c is a shape of homocentric rectangles, the inner rectangle may be an effective opening, that is, a through port on the housing 11, and the outer rectangle may be used for accommodating the guide assembly 40. In this example, the effective opening of the mounting port 11c can at least expose all the flame arrester holes 4111 on the partition mesh 411, thereby maximizing the function of the flame arrester assembly 41.

In this example, the thickness of one layer of partition mesh 411 or one layer of metal mesh or one layer of metal foam is greater than or equal to 1 mm, for example, greater than or equal to 1.2 mm, or greater than or equal to 1.5 mm, or greater than or equal to 1.8 mm, or greater than or equal to 2 mm.

In this example, the partition mesh 411 may be made of plastic with an ultra-high heat transfer coefficient, or graphite, or graphene, or the chemical-vapor-deposited (CVD) diamond film, or the like. In some examples, the partition mesh 411 may have at least a metal coating or a plastic organic coating.

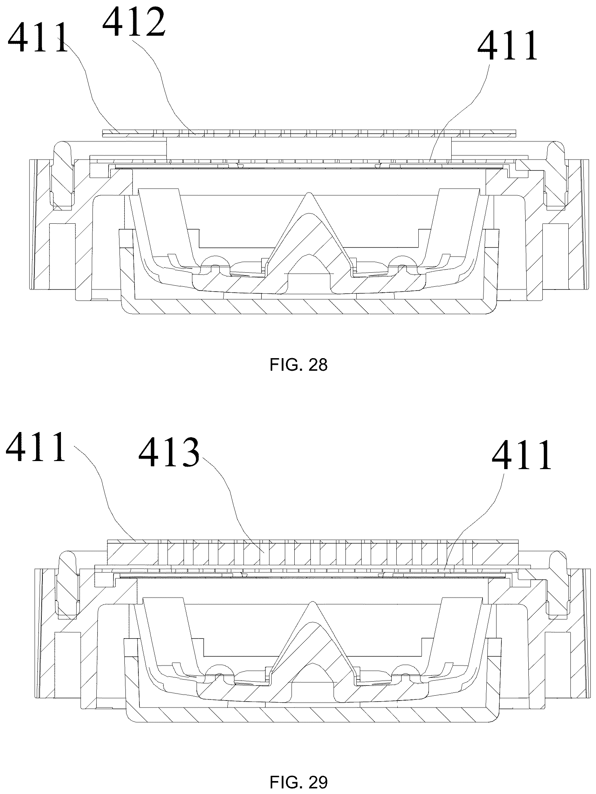

In this example, one layer of the partition mesh 411 may also be referred to as a metal mesh, a metal partition mesh, or a metal foam. In an example, as shown in FIG. 28, a phase change coating 412 is provided on the outer side surface of at least one layer of metal mesh or a side facing away from the cell module 12. When the high-temperature open flame in the housing 11 is in contact with the inner side surface of the metal mesh, the phase change coating 412 on the outer side of the metal mesh vaporizes from a solid state into smoke, which can help the metal mesh block the open flame. In an example, the phase change coating 412 may be a wax layer. The material of the phase change coating is not limited in this example. Other materials that can vaporize when exposed to high-temperature open flames may also be used as the material of the phase change coating 412.

In an example, as shown in FIG. 29, a fire extinguishing material 413 may be provided between two adjacent metal meshes. The fire extinguishing material 413 may be a material with high flame retardancy or fire extinguishing properties, such as a perfluorohexanone patch or high-flame-retardant oil, which can help the metal meshes block open flames.

The preceding examples may be used alone or in combination, which is not limited here.

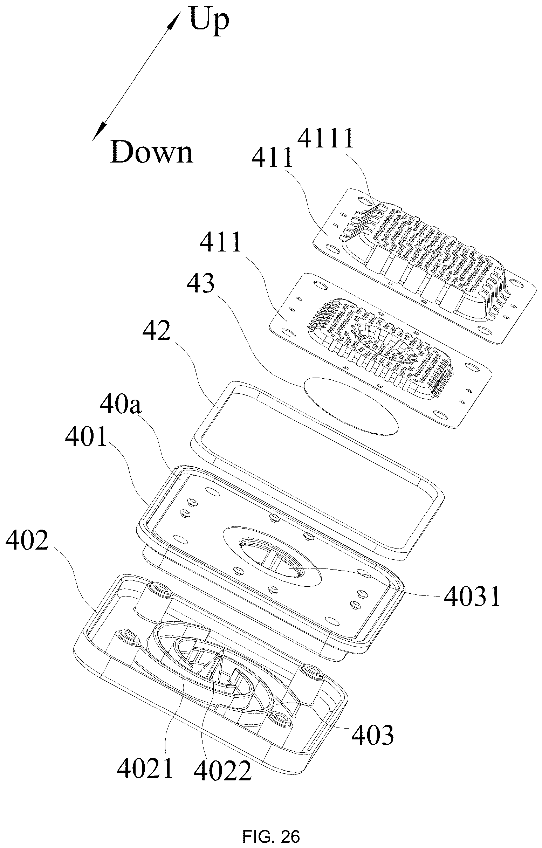

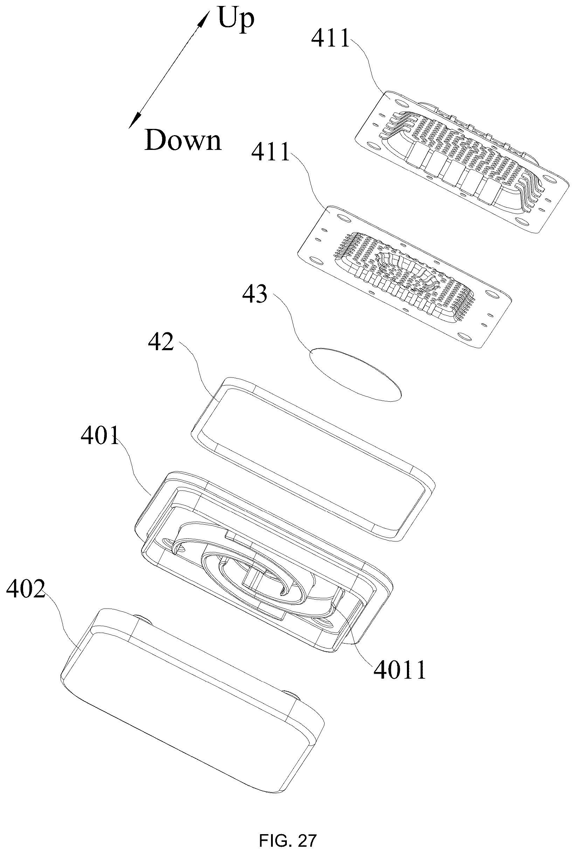

Referring to FIGS. 26 and 27, the separator 43 provided at the upper end of the guide assembly 40 and the lower end of the partition mesh 411 may be a waterproof and breathable film or an aluminum-plastic film that can isolate water vapor, dust, and other impurities under normal conditions. The separator 43 has a certain elasticity and can bulge from the inside out when the air pressure inside the housing 11 is greater than the air pressure outside the housing 11. Therefore, after thermal runaway occurs in the battery pack 100, the separator 43 bulges outward. As the bulge continues growing, the separator 43 ruptures so that the gas passing through the partition mesh 411 can break through the separator 43 and enter the guide assembly 40.

As shown in FIG. 26, a channel inlet 4031 is provided at the upper end of the guide assembly 40 to allow the gas leaking out through the separator 43 to enter the guide assembly 40. In this example, the first guide member 401 is disposed toward the inner side of the battery pack 100, or near the flame arrester assembly 41, or adjacent to the flame arrester assembly 41, and the second guide member 402 is opposite to the first guide member 401. Referring to FIG. 23, the screws 11d is driven into the second guide member 402 after penetrating the flame arrester assembly 41, the housing 11, and the first guide member 401, thereby fixing the pressure relief device 14 on the housing 11. To prevent gas from escaping from the gap between the contact surfaces of the pressure relief device 14 and the housing 11, the sealing member 42 is provided between the guide assembly 40 and the housing 11 to seal the gap between the guide assembly 40 and the housing 11. As shown in FIG. 19, the sealing member 42 is disposed at the upper end of the first guide member 401 or is disposed in a groove 40a formed by the first guide member 401, and the height of the sealing member 42 is greater than or equal to the depth of the groove 40a.

Referring to FIGS. 23 to 27, first guide ribs 4011 are disposed on the end surface of the first guide member 401 opposite to the second guide member 402, or in other words, the first guide ribs 4011 are disposed on the lower end surface of the first guide member 401; second guide ribs 4021 are disposed on the end surface of the second guide member 402 opposite to the first guide member 401, or in other words, the second guide ribs 4021 are disposed on the upper end surface of the second guide member 402. The first guide ribs 4011 and the second guide ribs 4021 can define or form multiple guide channels 403 within the guide assembly 40. The channel inlet 4031 of the multiple guide channels 403 is disposed on the first guide member 401, for example, at the position of the first guide member 401 facing the separator 43. The first guide member 401 and the second guide member 402 may mate with each other to form a circumferential gap, which may be used as a channel outlet 4032. Referring to FIGS. 26 and 27, the first guide ribs 4011 and the second guide ribs 4021 may be cyclone-shaped so that the guide channels 403 formed by the first guide ribs 4011 and the second guide ribs 4021 mating with each other may be multiple cyclone-shaped airflow paths 4033. In other examples, the first guide ribs 4011 and the second guide ribs 4021 may be continuous or discontinuous ribs of other shapes.

Referring to FIG. 24, the first distance h1 from the lower vertex of the first guide ribs 4011 to the upper surface of the second guide member 402 is greater than zero, the second distance h2 from the upper vertex of the second guide ribs 4021 to the lower surface of the first guide member 401 is greater than zero, and the first distance h1 and the second distance h2 may be equal or unequal. Therefore, after the gas enters the guide assembly 40 from the channel inlet 4031, the gas can climb over the first guide ribs 4011 and the second guide ribs 4021 and flow out from the channel outlet 4032, thereby forming wavy or curved airflow paths shown by the thick lines in FIG. 24. In this example, the airflow paths 4033 of various options or shapes ensure that the contact area between the guide assembly 40 and the high-temperature gas is large enough, thereby effectively slowing down the flow rate of the airflow and further preventing the leakage of open flames.

In this example, the guide assembly 40 may be made of metal or other materials with good heat conduction or heat absorption properties and has a certain mechanical strength. In an example, when the guide assembly 40 is made of a metal material, the heat transfer coefficient is greater than or equal to 40 W/(m·K) and less than or equal to 500 W/(m·K). For example, the heat transfer coefficient of the first guide member 401 and/or the second guide member 402 may be 40 W/(m·K), 80 W/(m·K), 120 W/(m·K), 160 W/(m·K), 200 W/(m·K), 250 W/(m·K), 300 W/(m·K), 400 W/(m·K), or 500 W/(m·K). In other examples, the guide assembly 40 may be made of plastic with an ultra-high heat transfer coefficient, or graphite, or graphene, or the CVD diamond film, or the like. In some examples, the guide assembly 40 may have at least a metal coating or a plastic organic coating. In some examples, the first guide member 401 and/or the second guide member 402 may be vapor chambers (VCs), such as VCs, gravity VCs, or phase change VCs. When the guide assembly 40 is made of different materials, the heat transfer coefficients are different. The heat transfer coefficients for different materials are not listed here.

In this example, as shown in FIG. 24, a puncture needle 4022 is disposed on the second guide member 401 in the same direction as the second guide ribs 4021. The function of the puncture needle 4022 is consistent with that of the puncture needle in the example shown in FIG. 13, that is, after the separator 43 bulges outward to a certain extent, the separator 43 can be in contact with the puncture needle 4022, and the puncture needle 4022 can puncture the separator 43 to release gas.

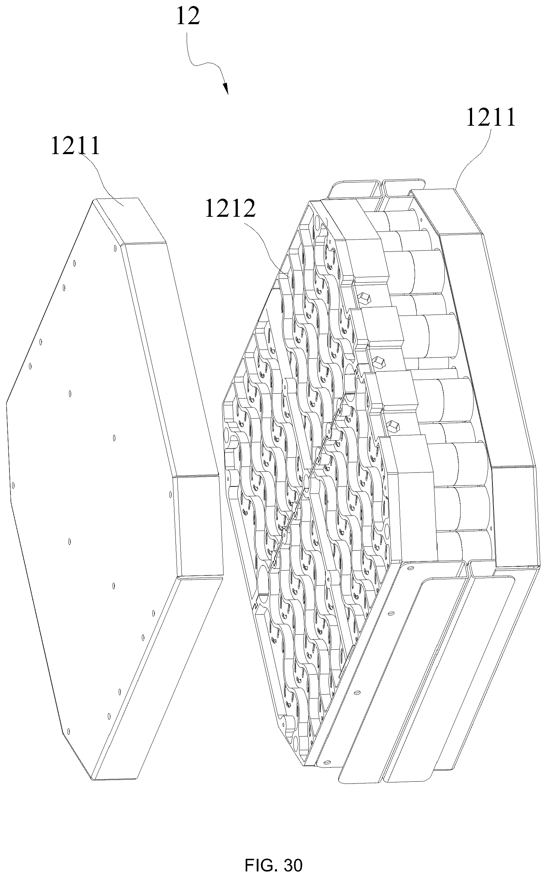

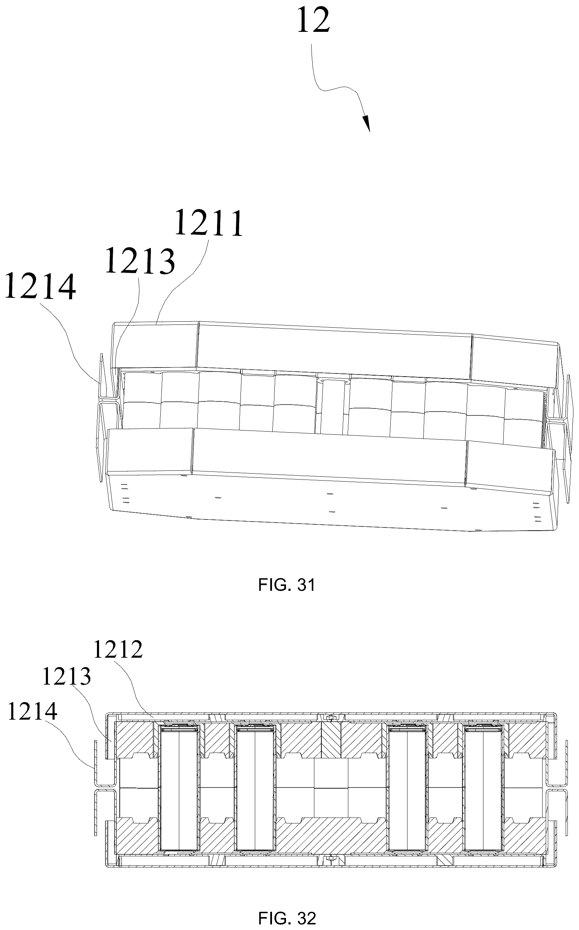

Referring to FIGS. 30 to 32, pressure relief assemblies 1211 are formed on two end surfaces of the cell module 12. Multiple pressure relief channels 1212 are formed in the pressure relief assemblies 1211. After thermal runaway occurs in the cell units 121, the generated flame or gas can be discharged from outlets 1213 along the pressure relief channels 1212. In this example, a baffle 1214 with at least one bend is provided at the outlet 1213 of the pressure relief channels 1212 to change the discharge direction of the flame or gas coming out of the outlet 1213 and prevent the flame from directly impinging on the cell housings of the cell units 121. Referring to the flow path of the airflow or flame as shown by the thick arrow in FIG. 26, due to the action of the baffles 1214, the flow rate of the flame or airflow can be reduced at the bends of the baffles 1214, thereby preventing the flame or airflow from being ejected too quickly.

In some examples, the inner side of at least one side surface of the housing 11 may be provided with a high-temperature and high-voltage insulating coating, thereby increasing the high-temperature resistance of the housing 11, preventing the housing 11 from being burned through when thermal runaway occurs in the cell units 121, and preventing open flames from leaking out. Alternatively, a metal plate, such as an aluminum plate, may be provided on the inner layer of at least one side surface of the housing 11 to prevent the housing 11 from being burned through during thermal runaway. Alternatively, in other examples, at least one side surface of the housing 11 may be configured as metal.

In an example, a fireproof layer may be provided on the inner side of the battery compartment 24, such as a fireproof blanket, an aerogel coating, or the heat-insulating metal or plastic such as a mica sheet.

Different implementation manners in this example can be combined with each other to obtain better or optimal results.

## Claims

1. A battery pack, comprising:
a housing;
a plurality of cells; and
a cell holder configured to support the plurality of cells;
wherein a plurality of exhaust channels are disposed in the housing;
an extension direction of the plurality of exhaust channels is basically perpendicular to an extension direction of the plurality of cells; and
energy of the battery pack is greater than or equal to 2 kW·h.

2. The battery pack of claim 1, wherein weight of the battery pack is greater than or equal to 10 kg.

3. The battery pack of claim 1, wherein gravimetric energy density of the battery pack is greater than or equal to 100 Wh/kg and less than or equal to 200 Wh/kg.

4. The battery pack of claim 1, wherein volumetric energy density of the battery pack is greater than or equal to 100 Wh/L and less than or equal to 200 Wh/L.

5. The battery pack of claim 1, wherein the battery pack is configured to be capable of being coupled to a power tool to power the power tool.

6. The battery pack of claim 1, wherein the extension direction of the plurality of exhaust channels is basically perpendicular to the extension direction of the plurality of cells.

7. The battery pack of claim 1, wherein exhaust housings are disposed in the housing, and at least one of the plurality of exhaust channels is formed in an exhaust housing of the exhaust housings.

8. The battery pack of claim 7, wherein the plurality of exhaust channels are curved.

9. The battery pack of claim 7, wherein density of the exhaust housing is greater than or equal to 1 g/cm³.

10. The battery pack of claim 7, wherein thermal deformation temperature of the exhaust housing is greater than or equal to 500°C.

11. The battery pack of claim 7, wherein a heat transfer coefficient of the exhaust housing at first temperature is greater than or equal to 0.5 W/m·K, and a heat transfer coefficient of the exhaust housing at second temperature is less than or equal to 0.05 W/m·K.

12. The battery pack of claim 7, wherein an exhaust channel of the plurality of exhaust channels comprises air inlet portions, and a wall thickness of an air inlet portion of the air inlet portions is less than a wall thickness of a non-exhaust portion.

13. The battery pack of claim 7, wherein an air outlet of an exhaust channel of the plurality of exhaust channels corresponds to a window on the housing.

14. The battery pack of claim 12, wherein the air inlet portion corresponds to a positive electrode or negative electrode of a cell of the plurality of cells.

15. The battery pack of claim 12, wherein the air inlet portion of the exhaust channel comprises a stop portion having a stopped state and an open state, wherein when impact strength is greater than a set value, the stop portion is in the open state, and when the impact strength is less than the set value, the stop portion is in the stopped state.

16. The battery pack of claim 15, wherein the stop portion comprises a valve.

17. The outdoor wheeled tool of claim 15, wherein the stop portion is formed by the exhaust housing, and a plurality of through holes are provided around the stop portion.

18. A riding mower, comprising:
a machine housing;
a seat mounted to the machine housing;
a traveling wheel set comprising traveling wheels supporting the machine housing;
a traveling electric motor for driving the traveling wheels to rotate;
a mowing assembly comprising a mowing element for mowing grass;
a drive electric motor for driving the mowing assembly to mow the grass; and
a battery pack mounting portion for mounting a battery pack that supplies power to the traveling electric motor;
wherein the battery pack comprises:
a housing;
a first cell module comprising first cells and a first cell holder supporting the first cells; and
a second cell module comprising second cells and a second cell holder supporting the second cells;
wherein a positive electrode/negative electrode of a first cell of the first cells is spaced a certain distance from a positive electrode/negative electrode of a second cell of the second cells; and
exhaust channels are disposed between positive electrodes/negative electrodes of the first cells and positive electrodes/negative electrodes of the second cells.

19. The riding mower of claim 18, wherein an extension direction of the exhaust channels is basically perpendicular to an extension direction of cells.

20. The riding mower of claim 18, wherein the exhaust channels are curved.

21. The riding mower of claim 18, wherein an exhaust channel of the exhaust channels comprises air inlet portions, and a wall thickness of an air inlet portion of the air inlet portions is less than a wall thickness of a non-exhaust portion.

22. The riding mower of claim 21, wherein the air inlet portion corresponds to a positive electrode or negative electrode of a cell.

23. The riding mower of claim 18, wherein an air outlet of an exhaust channel of the exhaust channels corresponds to a window on the housing.

24. A battery pack, comprising:
a housing;
a plurality of cells;
a cell holder configured to support the plurality of cells; and
exhaust channels disposed in the housing;
wherein an exhaust channel of the exhaust channels is provided with air inlet portions; and
the air inlet portions are closed at first temperature and opened at second temperature.

25. An outdoor wheeled tool, comprising:
a tool body;
a traveling wheel set configured to support the tool body;
a traveling electric motor configured to drive the traveling wheel set to travel; and
a battery pack mounting portion disposed on the tool body and used for mounting at least one battery pack;
wherein a battery pack of the at least one battery pack comprises:
a housing;
a plurality of cells; and
a cell holder configured to support the plurality of cells;
wherein density of the cell holder is greater than or equal to 1 g/cm³;
a heat transfer coefficient of the cell holder at first temperature is greater than or equal to 0.5 W/m·K, and a heat transfer coefficient of the cell holder at second temperature is less than or equal to 0.05 W/m·K; and
rated discharge power of the battery pack is greater than or equal to 2 kW and less than or equal to 8 kW.

26. A battery pack, comprising:
a housing;
a plurality of cells; and
a cell holder forming cell accommodation portions, each of which wraps each of the plurality of cells to isolate adjacent ones of the plurality of cells;
wherein a heat transfer coefficient of the cell holder at second temperature is less than or equal to 0.05 W/m·K; and
at least some of the plurality of cells are lithium iron phosphate cells.

27. The battery pack of claim 26, wherein exhaust housings are disposed in the housing, and at least one exhaust channel is formed in an exhaust housing of the exhaust housings.

28. The battery pack of claim 27, wherein an exhaust channel of the at least one exhaust channel comprises air inlet portions, and a wall thickness of an air inlet portion of the air inlet portions is less than a wall thickness of a non-exhaust portion.

29. The battery pack of claim 28, wherein the air inlet portion of the exhaust channel comprises a stop portion having a stopped state and an open state, wherein when impact strength is greater than a set value, the stop portion is in the open state, and when the impact strength is less than the set value, the stop portion is in the stopped state.

30. The battery pack of claim 29, wherein the stop portion comprises a valve.

31. The battery pack of claim 29, wherein the stop portion is formed by the exhaust housing, and a plurality of through holes are provided around the stop portion.

32. An outdoor wheeled tool, comprising:
a vehicle frame;
traveling wheels configured to support the vehicle frame;
an electric motor configured to at least drive the traveling wheels to travel; and
a battery compartment configured to accommodate a battery pack for supplying power to the electric motor;
wherein the battery compartment is provided with an airflow channel, and when the battery pack is mounted in the battery compartment, a pressure relief port of the battery pack is connected to an end of the airflow channel.

33. The outdoor wheeled tool of claim 32, wherein a compartment body of the battery compartment is at least partially made of a metal material.

34. The outdoor wheeled tool of claim 32, wherein the airflow channel is at least partially configured to be a curved channel.

35. The outdoor wheeled tool of claim 32, wherein another end of the airflow channel is connected to external atmosphere.

36. The outdoor wheeled tool of claim 32, wherein the battery compartment is detachably mounted at a rear end of the vehicle frame.

37. The outdoor wheeled tool of claim 32, wherein the battery compartment is integrally formed with the vehicle frame.

38. The outdoor wheeled tool of claim 32, wherein a buffer structure is disposed in the airflow channel.

39. The outdoor wheeled tool of claim 32, wherein a fireproof structure is disposed in the airflow channel.

40. The outdoor wheeled tool of claim 32, wherein a fireproof cover is provided outside the battery compartment, and the fireproof cover and at least an outer wall of the battery compartment covered by the fireproof cover form the airflow channel.

41. The outdoor wheeled tool of claim 40, wherein an opening on the battery compartment forms an end of the airflow channel, and the fireproof cover is detachably mounted on the battery compartment and covers at least the opening on the battery compartment.

42. An outdoor wheeled tool, comprising:
a vehicle frame;
traveling wheels configured to support the vehicle frame;
an electric motor configured to at least drive the traveling wheels to travel; and
a battery compartment configured to accommodate a battery pack for supplying power to the electric motor;
wherein the battery compartment is formed with an airflow channel, and the airflow channel is configured to at least guide an airflow to a bottom of the battery compartment for discharge.

43. The outdoor wheeled tool of claim 42, wherein the battery compartment is detachably mounted to the vehicle frame.

44. The outdoor wheeled tool of claim 42, wherein a plurality of openings are provided on a compartment base plate of the battery compartment.

45. The outdoor wheeled tool of claim 42, wherein at least a portion of a compartment base plate of the battery compartment is recessed outward, and a plurality of openings are provided at least on the portion of the compartment base plate recessed outward.

46. The outdoor wheeled tool of claim 42, wherein at least one smoke exhaust channel is formed on a sidewall and/or a top compartment cover of the battery compartment.

47. The outdoor wheeled tool of claim 42, wherein at least one wall of the battery compartment is a mesh structure.

48. The outdoor wheeled tool of claim 42, wherein a heat transfer coefficient of a main material of a compartment body of the battery compartment at room temperature is greater than or equal to 20 W/m·K.

49. The outdoor wheeled tool of claim 48, wherein a melting point of the main material of the compartment body is greater than or equal to 1000°C.

50. The outdoor wheeled tool of claim 48, wherein the main material of the compartment body is an iron-based alloy.

51. The outdoor wheeled tool of claim 48, wherein the compartment body is at least partially a mesh structure.

52. The outdoor wheeled tool of claim 48, wherein the compartment body is detachably mounted to a device body.

53. The outdoor wheeled tool of claim 48, wherein the compartment body is integrally formed with a device body.

54. The outdoor wheeled tool of claim 42, wherein the battery compartment comprises at least two sub-compartments, a partition is provided between at least two adjacent sub-compartments, and the partition is at least partially made of a flame-retardant material.

55. The outdoor wheeled tool of claim 54, wherein a heat transfer coefficient of the flame-retardant material at room temperature is less than or equal to 2 W/m·K.

56. The outdoor wheeled tool of claim 54, wherein the battery compartment is detachably mounted at a rear end of the vehicle frame.

57. The outdoor wheeled tool of claim 54, wherein the battery compartment is integrally formed with the vehicle frame.

58. The outdoor wheeled tool of claim 54, wherein at least one smoke exhaust channel is provided on the partition.

59. The outdoor wheeled tool of claim 54, wherein at least one smoke exhaust channel is formed on a sidewall and/or a top compartment cover of the battery compartment.

60. The outdoor wheeled tool of claim 54, wherein at least a portion of the bottom of the battery compartment is recessed inward, and a plurality of openings capable of discharging the airflow in the battery compartment are provided at least on the portion of the bottom of the battery compartment recessed inward.

61. The outdoor wheeled tool of claim 54, wherein at least one wall of the battery compartment is a mesh structure.

62. A battery pack, comprising:
a housing;
a cell module comprising a plurality of cell units and disposed in the housing;
a terminal assembly configured to be connected to a power tool to supply power to the power tool, wherein the terminal assembly is disposed on an outer side of the housing; and
a pressure relief device disposed on the housing;
wherein the pressure relief device comprises a waterproof and breathable layer and at least one layer of metal mesh.

63. The battery pack of claim 62, wherein the pressure relief device is disposed on a bottom housing of the battery pack.

64. The battery pack of claim 62, wherein the at least one layer of metal mesh is disposed on an inner side of the waterproof and breathable layer.

65. The battery pack of claim 62, wherein the waterproof and breathable layer ruptures when air pressure inside the battery pack is greater than or equal to 2 kPa.

66. The battery pack of claim 62, wherein the pressure relief device further comprises a protection structure disposed on an outer side of the waterproof and breathable layer.

67. The battery pack of claim 62, wherein the waterproof and breathable layer is provided with a pre-indentation.

68. The battery pack of claim 62, wherein the pressure relief device further comprises a puncture needle configured to puncture the waterproof and breathable layer when the waterproof and breathable layer bulges outward from the inside.

69. The battery pack of claim 62, wherein the at least one layer of metal mesh comprises a first metal mesh and a second metal mesh that are adjacent to each other, and the first metal mesh is disposed on an inner side of the second metal mesh.

70. The battery pack of claim 62, further comprising at least one energy conversion device configured to at least perform energy conversion from thermal energy to kinetic energy, wherein the at least one energy conversion device is disposed in the housing and thermally connected to the plurality of cell units.

71. The battery pack of claim 70, wherein the at least one energy conversion device comprises a fan.

72. The battery pack of claim 71, wherein the fan is a centrifugal fan.

73. The battery pack of claim 71, wherein the fan is disposed at a corner within the housing.

74. The battery pack of claim 71, wherein a radial dimension of the fan is greater than or equal to 50 mm.

75. The battery pack of claim 70, wherein at least one air outlet opening is formed on the housing.

76. The battery pack of claim 75, further comprising flow guide members, wherein a flow guide member of the flow guide members is configured to guide an airflow toward an air outlet opening of the at least one air outlet opening or toward a pressure relief port on the housing.

77. A battery pack, comprising:
a housing;
a cell module comprising a plurality of cell units and disposed in the housing; and
a pressure relief device detachably mounted to the housing;
wherein the pressure relief device is configured to at least guide high-temperature gas generated by thermal runaway of at least one of the plurality of cell units to be discharged from the housing.

78. The battery pack of claim 77, wherein the pressure relief device comprises a guide assembly formed with guide channels for guiding flow of the high-temperature gas.

79. The battery pack of claim 78, wherein the guide channels comprise at least a plurality of cyclone-shaped airflow paths.

80. The battery pack of claim 78, wherein the guide assembly comprises a first guide member disposed toward an inner side of the battery pack and a second guide member opposite to the first guide member, and a channel inlet of the guide channels is disposed on the first guide member.

81. The battery pack of claim 80, wherein the first guide member and the second guide member are detachably connected.

82. The battery pack of claim 80, wherein the guide assembly comprises first guide ribs disposed on an end surface of the first guide member opposite to the second guide member and second guide ribs disposed on an end surface of the second guide member opposite to the first guide member.

83. The battery pack of claim 82, wherein the first guide ribs and the second guide ribs are configured to define and form the guide channels.

84. The battery pack of claim 82, wherein a first distance from a lower vertex of the first guide ribs to an upper surface of the second guide member is greater than zero, and a second distance from an upper vertex of the second guide ribs to a lower surface of the first guide member is greater than zero.

85. The battery pack of claim 84, wherein the first distance is equal to the second distance.

86. The battery pack of claim 84, wherein the first distance is unequal to the second distance.

87. The battery pack of any one of claims 77 to 86, wherein the guide assembly is made of a metal material.

88. The battery pack of claim 80, wherein the pressure relief device further comprises a sealing member disposed at an upper end of the first guide member to seal a gap between the guide assembly and the housing.

89. The battery pack of claim 78, wherein the pressure relief device further comprises a flame arrester assembly disposed on an inner side of the guide assembly and configured to at least prevent open flames generated by thermal runaway of the plurality of cell units from entering the guide assembly.

90. The battery pack of claim 89, wherein the flame arrester assembly comprises at least a partition mesh provided with a plurality of flame arrester holes.

91. The battery pack of claim 90, wherein the partition mesh is disposed on an innermost side of the pressure relief device.

92. The battery pack of claim 90, wherein the partition mesh comprises at least two adjacent layers of metal meshes or metal foams.

93. The battery pack of claim 92, wherein a phase change coating is provided on an outer side surface of at least one layer of metal mesh or metal foam.

94. The battery pack of claim 92, wherein a fire extinguishing material is provided between at least adjacent metal meshes or metal foams.

95. The battery pack of claim 89, wherein the pressure relief device further comprises a separator disposed between the guide assembly and the flame arrester assembly.

96. A battery pack, comprising:
a housing;
a cell module comprising a plurality of cell units and disposed in the housing; and
a pressure relief device detachably mounted to the housing;
wherein the pressure relief device comprises at least:
a flame arrester assembly configured to at least prevent open flames generated by thermal runaway of at least one of the plurality of cell units from escaping from the housing.

97. The battery pack of claim 96, wherein the pressure relief device further comprises a guide assembly configured to at least guide high-temperature gas coming out of the flame arrester assembly to outside of the housing.

98. The battery pack of claim 96, wherein the flame arrester assembly comprises at least a partition mesh provided with a plurality of flame arrester holes.

99. The battery pack of claim 98, wherein the partition mesh is disposed on an innermost side of the pressure relief device.

100. The battery pack of claim 98, wherein the partition mesh comprises at least two adjacent layers of metal meshes or metal foams.

101. The battery pack of claim 100, wherein a phase change coating is provided on an outer side surface of at least one layer of metal mesh or metal foam.

102. The battery pack of claim 100, wherein a fire extinguishing material is provided between at least adjacent metal meshes or metal foams.

103. The battery pack of claim 97, wherein the pressure relief device further comprises a separator disposed between the guide assembly and the flame arrester assembly.

104. A battery pack, comprising:
a housing;
a first cell module comprising a plurality of cell units and disposed in the housing; and
a second cell module comprising a plurality of cell units and disposed in the housing;
wherein the housing has a first compartment and a second compartment, the first cell module is disposed in the first compartment, the second cell module is disposed in the second compartment, and the first compartment and the second compartment are thermally isolated.

105. A battery pack, comprising:
a housing;
a plurality of cell units disposed in the housing;
at least one discharge resistor capable of being electrically connected to the plurality of cell units;
a plurality of switching elements electrically connected to the plurality of cell units, respectively and electrically connected to the at least one discharge resistor;
a parameter detection unit configured to detect battery parameters of the battery pack; and
a controller configured to control at least one of the plurality of switching elements to be turned on when determining according to the battery parameters that the battery pack is at risk of thermal runaway so that discharge of at least one of the plurality of cell units is performed through the at least one discharge resistor.

106. The battery pack of claim 105, wherein the at least one discharge resistor is disposed near the housing.

107. The battery pack of claim 105, wherein the at least one discharge resistor is disposed between the housing and the plurality of cell units.

108. The battery pack of claim 105, wherein at least two of the plurality of cell units are capable of being connected in parallel and discharged simultaneously through the at least one discharge resistor.

109. The battery pack of claim 105, wherein the controller is further configured to, when remaining power of a discharged cell unit of the plurality of cell units is less than or equal to a power threshold, control a respective one of the plurality of switching elements to be turned off.

110. The battery pack of claim 109, wherein the power threshold is less than or equal to 50%.
